(19) Europäisches Patentamt
European Patent Office
Office européen des brevets

(11) EP 3 064 532 B1

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(51) Int Cl.:
***C08G 77/46*** *(2006.01)* ***C09D 175/04*** *(2006.01)*
***D06N 3/14*** *(2006.01)*

(21) Anmeldenummer: **15157322.7**

(22) Anmeldetag: **03.03.2015**

(54) **Herstellung poröser Polyurethanschichten**

Production of porous polyurethane layers

Fabrication de couches polyuréthane poreuses

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.09.2016 Patentblatt 2016/36**

(73) Patentinhaber: **Evonik Operations GmbH**
**45128 Essen (DE)**

(72) Erfinder:
- **Lüthge, Thomas**
**19086 Consrade (DE)**
- **Glos, Martin**
**46325 Borken (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 0 867 465** **EP-A2- 0 431 386**
**WO-A1-2014/202339** **US-A- 4 483 894**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 064 532 B1

Printed by Jouve, 75001 PARIS (FR)

## Beschreibung

Die vorliegende Erfindung liegt auf dem Feld der Polyurethane. Sie betrifft poröse Polyurethanschichten sowie deren Herstellung unter Einsatz bestimmter siliziumhaltiger Verbindungen. Sie betrifft weiterhin Verbundgebilde, umfassend solche poröse Polyurethanschichten. Sie betrifft weiterhin die Verwendung solcher Verbundgebilde als Kunstleder oder als Schaumfolie.

Poröse Polyurethanschichten und deren Herstellung sind an sich bekannt. Oft werden die porösen Schichten mit nicht-porösen Schichten kombiniert. Poröse Polyurethanschichten stellen meistens einen wesentlichen Bestandteil von mehrschichtigen Verbundmaterialien dar, die z. B. auf textile Trägermaterialen aufgetragen werden, um damit z.B. Leder-Imitate, auch Kunstleder genannt, als Produkt zu erhalten.

Poröse Polyurethanschichten können prinzipiell nach drei verschiedenen Verfahren hergestellt werden, nämlich via Koagulation, via PU-Dispersionen oder via High-Solid-Verfahren.

Beim Koagulationsverfahren wird mit großen Lösungsmittelmengen, vorwiegend Dimethylformamid (DMF), gearbeitet, was toxikologisch bedenklich ist und entsprechende Schwierigkeiten mit Emissionen der entsprechenden Endprodukte mit sich bringt.

Die Verwendung von wässrigen PU-Dispersionen ist zwar toxikologisch deutlich weniger belastend. Allerdings wird hierbei sehr viel Energie benötigt um die Wassermengen zu verdampfen.

Lösungsmittelarme oder lösungsmittelfreie Verfahren mit hohen Feststoffgehalten, sogenannte "High-Solid"-Verfahren, sind sowohl aus toxikologischen als auch aus energetischen Gründen vorzuziehen. In der Herstellung wird weniger Energie benötigt und die fertigen Produkte haben keine Emissionsprobleme, die von Lösungsmitteln verursacht werden können. Solche High-Solid-Systeme sind an sich bekannt. Beispielsweise werden in den Patentanmeldungen EP 2476800 A1, WO 2014/012710 A1 und EP 1059379 A2 verschiedene High-Solid-Systeme beschrieben, die modernen Anforderungen genügen.

Nach dem Stand der Technik werden Siloxane entweder in ungeschäumten, nicht-porösen Schichten als Verlaufsmittel beschrieben, wobei sie als Entschäumer wirken. Oder es werden Siloxane in geschäumten Schichten nur als Stabilisatoren zur Vermeidung von Zell-Koaleszenz beschrieben.

WO 2009/011776 A1 beschreibt ein Verfahren, bei dem die Reaktionsmischung mechanisch aufgeschäumt wird. Dabei wird eine Kombination aus verschiedenen Siloxanen, (AB)n-Typen und Kamm-Typen, verwendet, um eine bessere Schaumstabilität der mechanisch aufgeschäumten Reaktionsmischung zu erreichen, was dann auch in Schaumschichten mit einer geringeren Dichte resultiert.

In US 4483894 werden ebenfalls mechanisch aufgeschäumte Systeme beschrieben, die mit Siloxanen stabilisiert werden, welche eine Molmasse von kleiner 30000 g/mol haben, wobei die Polyether-Seitenketten zu mindestens 60% aus Oxyethyleneinheiten bestehen und der Anteil an Polydimethylsiloxan bei 14-40% der Gesamtmasse des Siloxans liegt.

In WO2008/012908 A1 werden mechanisch aufgeschäumte PU-Schäume beschrieben, bei denen als Polyol-Komponente zu 50-80% Polytetramethylen-Polyole verwendet werden und bestimmte Silicon-Surfactants eingesetzt werden. Diese weisen einen Anteil an Polydimethylsiloxan von 5-20 Gew-% der Gesamtmasse auf und als Seitenketten liegen endverkappte, also nicht OHfunktionelle, Polyether mit Molmassen von 1000 bis 2000 g/mol vor.

Die Herstellung qualitativ hochwertiger poröser Schaumschichten ist sehr diffizil, da gleichzeitig verschiedene Aufgaben gelöst werden müssen.

Um überhaupt qualitativ hochwertige poröse Schaumschichten bereitstellen zu können, wird grundsätzlich angestrebt, einen guten Verlauf des Materials, das die poröse Schaumschicht bilden soll, zu gewährleisten und außerdem eine hinreichende Stabilisierung der Zellen zu ermöglichen, so dass gleichmäßig strukturierte und insbesondere feinzellige poröse Schichten hergestellt werden können. Auch wird grundsätzlich die Möglichkeit angestrebt, je nach Bedarf die Zellgröße und die Dichte der Schaumschicht zu beeinflussen, um möglichst maßgeschneiderte Produkte bereitstellen zu können.

Weiter Ansprüche, die gestellt werden, sind die Reduktion von Emissionen an flüchtigen organischen Substanzen (Volatile Organic Compounds, VOC). Hier werden speziell in der Automobilindustrie strenge Standards wie z.B. die VDA 278 angewendet um ein Material zu qualifizieren.

Die konkrete Aufgabe der vorliegenden Erfindung war es nun, die Bereitstellung von porösen Polyurethanschichten insoweit zu verbessern, dass bei der Herstellung der betreffenden Schichten sowohl ein guter Verlauf der Rektionsmischung als auch eine hinreichende Stabilisierung der Zellen gewährleistet werden können, um somit die Bereitstellung gleichmäßig strukturierter und feinzelliger poröser Schichten zu ermöglichen.

Überraschenderweise konnte nun im Rahmen dieser Erfindung gefunden werden, dass der Einsatz Silizium-haltiger Verbindungen der Formel (1) bei der Herstellung von Polyurethanschichten die Lösung der vorgenannten Aufgabe ermöglicht.

Der Einsatz von Silizium-haltigen Verbindungen bei der Herstellung von Polyurethanen ist zwar an sich bekannt. Allerdings werden im Stand der Technik Siloxane entweder in ungeschäumten, nicht-porösen Schichten als Entschäumer

eingesetzt oder es werden Siloxane in geschäumten Schichten nur als Stabilisatoren zur Vermeidung von Zell-Koaleszenz beschrieben.

Die erfindungsgemäß einzusetzenden Siloxane der Formel (1), im Folgenden auch Siloxane genannt, können dagegen überraschenderweise in geschäumten Schichten zwei Funktionen gleichzeitig übernehmen, nämlich einerseits die Stabilisierung der Zellen oder Poren, und andererseits die Verbesserung des Verlaufs der Reaktionsmasse. Damit können gleichmäßig strukturierte und feinzellige poröse Schichten aus Polyurethan hergestellt werden. Außerdem ermöglichen sie die Bereitstellung besonders emissionsarmer poröser Polyurethanschichten.

Der Gegenstand der vorliegenden Erfindung ist somit die Verwendung zumindest einer siliziumhaltigen Verbindung bei der Herstellung von porösen Polyurethanschichten, wobei die siliziumhaltige Verbindung der Formel (1) genügt

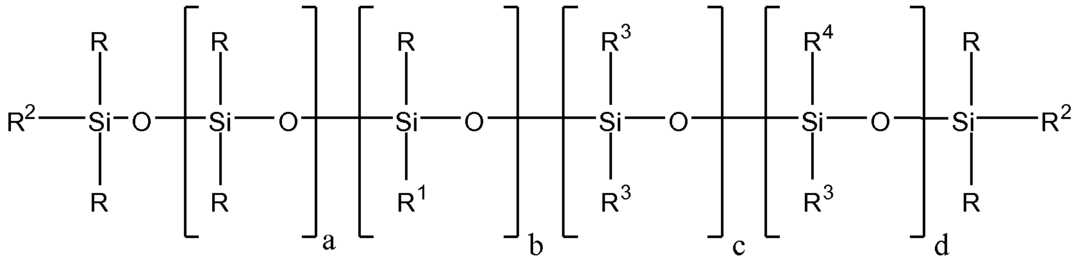

$R^3$ = 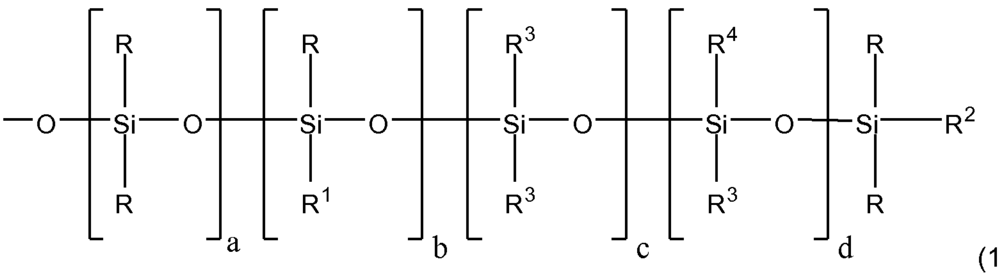

(1)

mit

- a unabhängig voneinander 0 bis 500 ist, vorzugsweise 1 bis 300 und insbesondere 2 bis 150,
- b unabhängig voneinander 0 bis 60 ist, vorzugsweise 1 bis 50 und insbesondere 1 bis 30,
- c unabhängig voneinander 0 bis 10, vorzugsweise 0 oder > 0 bis 5, ist,
- d unabhängig voneinander 0 bis 10, vorzugsweise 0 oder > 0 bis 5, ist,

mit der Maßgabe, dass pro Molekül der Formel (1) die mittlere Anzahl $\sum d$ der T-Einheiten und die mittlere Anzahl $\sum c$ der Q-Einheiten pro Molekül jeweils nicht größer als 50, die mittlere Anzahl $\sum a$ der D-Einheiten pro Molekül nicht größer als 2000 und die mittlere Anzahl $\sum b$ der $R^1$ tragenden Siloxy-Einheiten pro Molekül nicht größer als 100 ist,

- R unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
- $R^2$ unabhängig voneinander $R^1$ oder R ist,
- $R^1$ ist ungleich R und unabhängig voneinander ist $R^1$ ein Rest ausgewählt aus der Gruppe

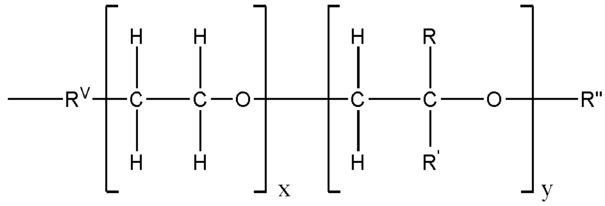

$-CH_2-CH_2-CH_2-O-(CH_2-CH_2O-)_x-(CH_2-CH(R')O-)_y-R''$

$-CH_2-CH_2-O-(CH_2-CH_{2O}-)_x-(CH_2-CH(R')O-)_y-R''$

$-O-(C_2H_4O-)_x-(C_3H_5O-)_y-R'$

$-CH_2-R^{IV}$

$-CH_2-CH_2-(O)_{x'}-R^{IV}$

$-CH_2-CH_2-CH_2-O-CH_2-CH(OH)-CH_2OH$

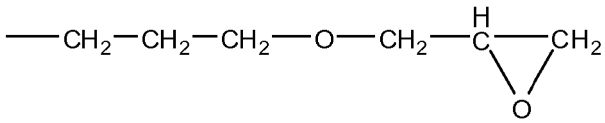

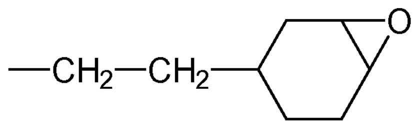

oder

$-CH_2-CH_2-CH_2-O-CH_2-C(CH_2OH)_2-CH_2-CH_3$

ist, worin

x 0 bis 100, vorzugsweise > 0, insbesondere 1 bis 50,

x' 0 oder 1,

y 0 bis 100, vorzugsweise > 0, insbesondere 1 bis 50,

R' unabhängig voneinander eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist, wobei innerhalb eines Restes $R^1$ und/oder eines Moleküls der Formel (1) untereinander verschiedene Substituenten R' vorliegen können, und

R" unabhängig voneinander ein Wasserstoffrest oder eine Alkylgruppe mit 1 bis 4 C-Atomen, eine Gruppe -C(O)-R'" mit R'" = Alkylrest, eine Gruppe $-CH_2-O-R'$, eine Alkylarylgruppe, wie z. B. eine Benzylgruppe, oder eine Gruppe -C(O)NH-R' bedeutet,

$R^{IV}$ ein linearer, cyclischer oder verzweigter, ggf. substituierter, z. B. mit Halogenen substituierter, Kohlenwasserstoffrest mit 1 bis 50, vorzugsweise 9 bis 45, bevorzugt 13 bis 37 C-Atomen ist,

$R^V$ $-D-G_z-$
wobei D ein linearer, cyclischer oder verzweigter, ggf. substituierter, z. B. mit Heteroatomen wie O,N oder Halogenen substituierter, gesättigter oder ungesättigter Kohlenwasserstoffrest mit 2 bis 50, vorzugsweise 3 bis 45, bevorzugt 4 bis 37 C-Atomen ist,
G einer der folgenden Formeln entspricht

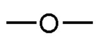 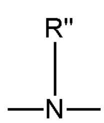 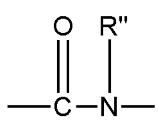 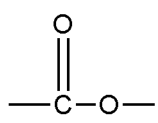

z gleich 0 oder 1 sein kann,

$R^4$ unabhängig voneinander R, $R^1$ und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest sein kann,

mit der Maßgabe, dass mindestens ein Substituent aus $R^1$, $R^2$ und $R^4$ nicht gleich R ist, wobei die Dicke der Polyurethanschicht im Bereich von 0,05 bis 3 mm liegt.

$R^3$ stellt die Siloxan-Seitenketten dar, die durch T- und Q-Einheiten entstehen können. Da man nicht exakt steuern kann, wo diese Verzweigungen sitzen, tritt in der Formel (1) für $R^3$ wiederum $R^3$ auf. Es kann also zu hyperverzweigten Strukturen kommen wie es beispielsweise bei Dendrimeren auftritt.

Die verschiedenen Monomereinheiten der in den Formeln angegebenen Bausteine (Siloxanketten bzw. Polyoxyalkylenkette) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Dieser erfindungsgemäße Gegenstand ermöglicht eine Verbesserung der Verlaufseigenschaften der zur Polyurethanschicht reagierenden Reaktionsmasse und gleichzeitig eine Zelloptimierung des resultierenden Polyurethanschicht, insbesondere Homogenisierung der Zellstruktur über die gesamte resultierende Polyurethanschicht, die besonders emissionsarm ist, vorzugsweise im Rahmen der Kunstleder- oder Schaumfolienherstellung.

Die erfindungsgemäßen Polyurethanschichten können insbesondere bei der Fabrikation von Oberbekleidung, Täschnerwaren, Schuhobermaterial, Zeltplanen, Markisen, Polsterwaren und vielen anderen Artikeln, insbesondere im Automobilbereich, verwendet werden.

Der Begriff der porösen Polyurethanschicht ist an sich bekannt. Es handelt sich um ein zusammenhängendes, insbesondere flexibles, Flächengebilde, das Hohlräume (auch Poren oder Zellen genannt) aufweist und auf Polyurethan basiert. Die Hohlräume sind vorzugsweise mit Luft ausgefüllt. Je nachdem, ob die Poren mit bloßem Auge erkennbar ($\geq$20 $\mu$m) oder nicht erkennbar sind ($\leq$ 20 $\mu$m), unterscheidet man Grobporen und Feinporen, wobei letztere weiter in Makroporen (>50 nm), Mesoporen (2-50 nm) und Mikroporen (<2 nm) unterteilt werden. Offene Poren stehen mit dem umgebenden Medium in Verbindung, geschlossene Poren sind in sich abgeschlossen und lassen kein Medium eindringen. Statt des Begriffes "Schicht" kann z.B. auch der Begriff "Film", "Beschichtung" oder "Folie" Verwendung finden.

Gemäß einer bevorzugten Ausführungsform der Erfindung liegt die Dicke der hergestellten Polyurethanschicht im Bereich von 0,1 bis 3 mm und insbesondere 0,15 bis 1 mm.

Die Herstellung der Siloxane nach Formel (1) ist an sich bekannt und kann nach den etablierten Methoden erfolgen, wie z.B. edelmetallkatalysierter Hydrosilylierungsreaktion von Verbindungen, die eine Doppelbindung enthalten, mit entsprechenden Wasserstoffsiloxanen wie beispielsweise in EP 1520870 A1, beschrieben.

Als Verbindungen, die zumindest eine Doppelbindung pro Molekül aufweisen, können z. B. $\alpha$-Olefine, Vinylpolyoxyalkylene und/oder Allylpolyoxyalkylene eingesetzt werden. Vorzugsweise werden Vinylpolyoxyalkylene und/oder Allylpolyoxyalkylene eingesetzt. Besonders bevorzugte Vinylpolyoxyalkylene sind z. B. Vinylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevor-zugte Allylpolyoxyalkylene sind z. B. Allylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion end-verkappt sein können. Besonders bevorzugt werden als Verbindungen, die zumindest eine Doppelbindung pro Molekül aufweisen, die in den Beispielen genannten $\alpha$-Olefine, Allylalkohol, 1-Hexenol, Vinylpolyoxyalkylene und/oder Allylpolyoxyalkylene sowie Allylglycidylether und Vinylcyclohexenoxid eingesetzt.

Ebenso können Verbindungen mit mehr als einer hydrosilylierbaren Doppelbindung verwendet werden, wodurch vernetzte Siloxan-Strukturen gebildet werden bei denen mehrere Siloxan-Ketten miteinander verbunden sind. Verbindungen dieser Art sind zum Beispiel 1,3-Divinyltetramethyldisiloxan, 1,7-Octadien, Diallylpolyoxyalkylenglykole, Dimethallylpolyoxyalkylenglykole, Polyalkylenglylolbis(acrylsäureester), oder Trimethylolpropandiallylether, Triallylisocyanurat. Weitere geeignete Verbindungen sind z.B. Ester, wie Allylmethacrylat, Allylacrylat, Diallyladipat, Methallylacrylat, Methallylmethacrylat, Vinylacrylat, Vinylmethacrylat, Ethylendimethacrylat, Tetramethylendiacrylat und Pentaerythrittetramethacrylat sowie z.B. Ether wie Glykoldivinylether, Divinyladipat, Allylvinylether, Diallylfumarat, Triallylcyanurat und Trimethylolpropan-triallylether.

Entsprechende Siloxanstrukturen werden auch in den folgenden Patentschriften beschrieben, wobei dort die Verwendung allerdings nur in klassischen Polyurethanschäumen, als Formschaum, Matratze, Isolationsmaterial, Bauschaum, etc. beschrieben ist: CN103665385, CN103657518, CN103055759, CN103044687, US 2008/0125503, EP 1520870 A1, EP 1211279, EP 0867464, EP 0867465, EP 0275563.

Bevorzugt werden im Rahmen der vorliegenden Erfindung solche Siloxane der Formel (1) eingesetzt, worin a unabhängig voneinander 1 bis 300 ist, b unabhängig voneinander 1 bis 50 ist, c unabhängig voneinander 0 bis 4 ist, z.B. > 0 bis 4, d unabhängig voneinander 0 bis 4 ist, z.B. > 0 bis 4, mit der Maßgabe, dass pro Molekül der Formel (1) die mittlere Anzahl $\sum$d der T-Einheiten und die mittlere Anzahl $\sum$c der Q-Einheiten pro Molekül jeweils nicht größer als 20, die mittlere Anzahl $\sum$a der D-Einheiten pro Molekül nicht größer als 1500 und die mittlere Anzahl $\sum$b der $R^1$ tragenden Siloxy-Einheiten pro Molekül nicht größer als 50 ist. Dies entspricht einer besonders bevorzugten Ausführungsform der Erfindung.

In einer bevorzugten Ausführungsform der vorliegenden Erfindung, hier und im Folgenden aus systematischen Gründen als Variante B bezeichnet, werden solche Siloxane der Formel (1) eingesetzt bei denen die Indices c und d gleich null sind. In solchem Fall sind keine verzweigten (oder verzweigenden) Siloxan-Einheiten vorhanden. In diesem

Fall, Variante B, kann man die Siloxane mit der Formel 2 beschreiben:

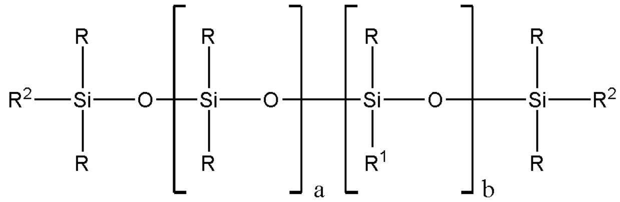

Formel (2)

Für hier nicht spezifizierte Formelbestandteile wie a, b usw. gelten die o.g. Definitionen.

In einer weiteren bevorzugten Ausführungsform der vorliegenden Erfindung, hier und im Folgenden aus systematischen Gründen als Variante D bezeichnet, werden Siloxane der Formel (1 bis 3) eingesetzt, worin $R^1$ wie unter Variante A beschrieben ist mit der Maßgabe, dass der molare Anteil an Oxyethylen-Einheiten bezogen auf die Gesamtmenge Oxyalkyleneinheiten mind. 70 Äquivalent% der Oxalkylen-Einheiten ausmacht, also x/(x+y) >0,7 ist. Hier nicht spezifizierte Formelbestandteile sind wie oben definiert.

In einer weiteren bevorzugten Ausführungsform der vorliegenden Erfindung, hier und im Folgenden aus systematischen Gründen als Variante E bezeichnet, werden Siloxane der Formel (1 bis 3) eingesetzt, worin $R^1$ entsprechend Variante A ausgeführt ist und
unabhängig voneinander ein organischer Rest ausgewählt aus der Gruppe umfassend -CH2-CH2-CH2-O-(CH2-CH2O-)x-(CH2-CH(R')O-)y-R" und/oder -RV-O-(CH2-CH2O-)x-(CH2-CH(R')O-)y-R" und/ oder -CH2-CH2-O-(CH2-CH2O-)x-(CH2-CH(R')O-)y-R" und /oder -CH2-$R^{IV}$ ist,
mit der Maßgabe dass, x 0 bis 100, vorzugsweise > 0, insbesondere 1 bis 50, y 0 bis 100, vorzugsweise > 0, insbesondere 1 bis 50, R' Methyl ist und R" unabhängig voneinander ein Wasserstoff-rest oder eine Alkylgruppe mit 1 bis 4 C-Atomen, eine Gruppe C(O)-R'" mit R'" = Alkylrest, eine Gruppe -CH2-O-R', eine Alkylarylgruppe, wie z. B. eine Benzylgruppe, die Gruppe C(O)NH-R' bedeutet,
wobei der molare Anteil an Oxyethylen-Einheiten bezogen auf die Gesamtmenge Oxyalkyleneinheiten maximal 60 Äquivalent % der Oxalkylen-Einheiten ausmacht, also x/(x+y) <0,6 ist. Hier nicht spezifizierte Formelbestandteile sind wie oben definiert.

In einer weiteren bevorzugten Ausführungsform der vorliegenden Erfindung, hier und im Folgenden aus systematischen Gründen als Variante F bezeichnet, werden Siloxane der Formel (1) verwendet wobei die Reste R" mindestens zu 80%, besonders bevorzugt mindestens zu 90% Wasserstoff sind. Hier nicht spezifizierte Formelbestandteile sind wie oben definiert. Hier nicht spezifizierte Formelbestandteile sind wie oben definiert.

In einer weiteren bevorzugten Ausführungsform der vorliegenden Erfindung, hier und im Folgenden aus systematischen Gründen als Variante G bezeichnet, werden Siloxane der Formel (1) verwendet wobei von den Resten R" 30 bis 80%, besonders bevorzugt 40 bis 70 % Wasserstoff sind. Hier nicht spezifizierte Formelbestandteile sind wie oben definiert.

In einer weiteren bevorzugten Ausführungsform der vorliegenden Erfindung, hier und im Folgenden aus systematischen Gründen als Variante H bezeichnet, werden Siloxane der Formel (1) verwendet wobei die Reste R" höchstens zu 20%, besonders bevorzugt höchstens zu 10% Wasserstoff sind. Hier nicht spezifizierte Formelbestandteile sind wie oben definiert.

In einer weiteren bevorzugten Ausführungsform der vorliegenden Erfindung, hier und im Folgenden aus systematischen Gründen als Variante K bezeichnet, werden Siloxane der Formel (1 bis 3) verwendet in denen die endständigen, oder auch alpha- und omega- genannten, Positionen am Siloxan mindestens teilweise mit Resten $R^1$ funktionalisiert sind. Es sind hierbei zumindest 10 mol-%, bevorzugt zumindest 30 mol-%, besonders bevorzugt zumindest 50 mol-% der endständigen Positionen mit Resten $R^1$ funktionalisiert. Hier nicht spezifizierte Formelbestandteile sind wie oben definiert.

In einer besonders bevorzugten Ausführungsform der Erfindung, hier und im Folgenden aus systematischen Gründen als Variante L bezeichnet, werden Siloxane der Formel (1 bis 3) verwendet, in denen im statistischen Mittel maximal 70%, bevorzugt maximal 65%, besonders bevorzugt maximal 60% des gesamten mittleren Molgewichts des Siloxans auf die aufsummierte Molmasse aller, gegebenenfalls unterschiedlichen, Reste $R^1$ im Siloxan entfällt. Hier nicht spezifizierte Formelbestandteile sind wie oben definiert.

In einer weiteren bevorzugten Ausführungsform der vorliegenden Erfindung, hier und im Folgenden aus systematischen Gründen als Variante N bezeichnet, werden Siloxane der Formel (1 bis 3) verwendet in denen der Rest R für Methyl steht und die Anzahl der Strukturelemente mit dem Index a in größerer Anzahl vorliegen als die Strukturelemente mit dem Index b, in der Art, dass der Quotient a/b mindestens gleich vier, vorzugsweise größer fünf, besonders bevorzugt größer sieben ist. Hier nicht spezifizierte Formelbestandteile sind wie oben definiert.

In einer weiteren bevorzugten Ausführungsform der vorliegenden Erfindung, hier und im Folgenden aus systematischen Gründen als Variante P bezeichnet, werden Siloxane der Formel (1 bis 3) verwendet in denen der Rest R für Methyl steht und die Summe aus den D-Einheiten ($\sum a$) und R1 tragenden Einheiten ($\sum b$) also ($\sum a + \sum b$) größer als 15 , bevorzugt größer als 25, ganz besonders bevorzugt größer 45 ist. Hier nicht spezifizierte Formelbestandteile sind wie oben definiert.

In weiteren besonders bevorzugten Ausführungsformen der Erfindung werden Siloxane der Formel (1-3) verwendet, deren Strukturen die folgenden Varianten kombinieren:

Variante F mit der Variante K
Variante G mit der Variante K
Variante D kombiniert mit den Varianten F und K
Variante D kombiniert mit den Varianten F, K, L und N

Jede einzelne der vorgenannten Variantenkombinationen entspricht einer besonders bevorzugten Ausführungsform der Erfindung.

Gemäß einer weiteren bevorzugten Ausführungsform der Erfindung zeichnet sich die erfindungsgemäße Verwendung dadurch aus, dass die Gesamtmenge der eingesetzten siliziumhaltigen Verbindung(en) der Formel (1) so bemessen ist, dass der Massenanteil an Verbindungen der Formel (1) bezogen auf das fertige Polyurethan 0,01 bis 10 Gew.-%, bevorzugt 0,1 bis 3 Gew.-% beträgt.

Die erfindungsgemäßen Siloxane können im Rahmen der vorliegenden Erfindung, insbesondere im Rahmen der erfindungsgemäßen Verwendung, auch als Teil von Zusammensetzungen mit verschiedenen Trägermedien eingesetzt werden. Als Trägermedien kommen beispielweise Glykole, Alkoxylate oder Öle synthetischer und/oder natürlicher Herkunft in Frage.

Ebenso können zusätzlich zu den erfindungsgemäßen Siloxane auch Si-freie Tenside zum Einsatz kommen. Dies können nicht-ionische, anionische, kationische oder auch amphotere Stoffe sein wie z.B. Fettsäurepolyglykolester, Fettalkoholalkoxylate, Fettaminalkoxylate, Alkoxylierungsprodukte mit amphiphilen Eigenschaften, Alkylphenolalkoxylate, Polyglycerin-Derivate, Fettsäureamide, Sorbitanether, Sorbitanester, Sorbitolether, Sorbitolester, Sulfonsäure-Derivate, Sulfat-Ester, Phosphorsäureester, Sulfosuccinamate, Ammonium-Salze, Quaternäre Ammoniumverbindungen, Betaine, Amphoacetate, Alkylsulfate, Alkylethersulfate, Arylsulfonate, Alkylarylsulfonate, Alkansulfonate, Ester der Phosphorsäure, Phosphonsäure oder Phosphinsäure, Acylglutamate, Aminoxide, Ethercarboxylate, Isethionate, Methyl Taurate, Sarcosinate, Isethionate Sulfosuccinate, etc.

Es entspricht weiterhin einer bevorzugten Ausführungsform der Erfindung, wenn bei der erfindungsgemäßen Herstellung der porösen Polyurethanschicht ein lösemittelfreies oder lösemittelarmes Verfahren zum Einsatz kommt.

Unter "lösemittelarmen Verfahren" wird im Sinne dieser Erfindung ein Herstellungsprozess verstanden, der mit möglichst geringen Mengen Lösungsmittel stattfindet. Das heisst, das vorteilhafterweise weniger als 35 Gew.-%, in weiter vorteilhafter Weise weniger als 25 Gew.-%, bevorzugt weniger als 10 Gew.-%, besonders bevorzugt weniger als 5 Gew.-% Lösungsmittel bei der Herstellung der porösen PU-Schicht verwendet werden, wobei sich die Gew.-% Angabe auf gesamte Reaktionsmischung, also einschließlich optionaler Stoffe, wie z.B. Füllstoffe, bezieht. Eine Untergrenze für das Lösungsmittel kann z.B. bei 0,1 Gew.-% oder z.B. bei 1 Gew.-% liegen.

Unter "lösemittelfreiem Verfahren" wird im Sinne dieser Erfindung ein Herstellungsprozess verstanden, der frei von Lösungsmittel stattfindet.

Als Lösungsmittel kommen alle nach dem Stand der Technik geeigneten Substanzen in Frage. Je nach Anwendung können z.B. aprotisch-unpolare, aprotisch-polare und/oder protische Lösungsmittel eingesetzt werden.

Es entspricht einer weiteren bevorzugten Ausführungsform der Erfindung, wenn zur Herstellung der porösen Polyurethanschicht chemisch blockierte, vorzugsweise Oxim-blockierte, NCO-Prepolymere und Vernetzer, vorzugsweise umfassend aliphatische und/oder cycloaliphatische und/oder aromatische Aminen mit mindestens 2 primären und/oder sekundären Aminogruppen, eingesetzt werden. Hierbei werden Polyole mit mehrfunktionellen Isocyanaten umgesetzt, um ein Isocyanat-Prepolymer zu erhalten. Anschließend werden die freien NCO-Funktionalitäten vorzugsweise mit Oximen zur Reaktion gebracht. Die Oxime können in der Wärme wieder abgespalten und somit die NCO-Gruppe wieder freigesetzt werden. Somit kann eine Reaktionsmasse, bestehend aus blockierten Isocyanaten und Aminen, insbesondere durch Erhitzen, vorteilhafterweise auf ca. 100-190°C, vorzugsweise 120-170°C, ausgehärtet werden. In EP0431386A2 ist ein typisches Verfahren dieser Art beschrieben.

Als Blockierungsmittel für die NCO-Prepolymeren kommen alle aus der Polyurethanchemie an sich bekannten Verbindungen für die Maskierung von NCO-Gruppen in Frage, welche beim Erhitzen, z.B. auf über ca. 100°C unter Freisetzung der Isocyanatgruppen wieder abgespalten werden, beispielsweise Ketoxime aus Hydroxylamin und Ketonen wie Aceton, Methylethylketon, Diethylketon, Methylpropylketon, Methylisopropylketon, Methylisobutylketon, Cyclohexanon, Acetophenon und Benzophenon. Weiterhin eignen sich als Blockierungsmittel auch Alkylester der Acetessigsäure und der Malonsäure, z.B. Acetessigsäureethylester und Malonsäurediethylester, Lactame wie Caprolactam, sowie Phenole wie Nonylphenol. Bevorzugte Verwendung können erfindungsgemäß z.B. Prepolymere aus Polypropylenglykolethern bzw. propoxyliertem Bisphenol A und Toluylendiisocyanat und/oder Diphenylmethandiisocyanat finden, die mit Methylethylketoxim (Butanon-oxim) blockiert sind.

Zur Vernetzung können insbesondere aliphatische und/oder cycloaliphatische und/oder aromatische Aminen mit mindestens 2 primären und/oder sekundären Aminogruppen eingesetzt werden. Solche Amine sind z.B. Ethylendiamin, Diethylentriamin, Propyiendiamin-1,2, Propylendiamin-1,3, Hexandiamin-1,6, N-Methyl-bis-(3-aminopropyl)-amin, Cyclohexandiamin-1,3 und -1,4, Isophorondiamin, 4,4'-Diaminodicyclohexylmethan, die isomeren 4,4'-Diaminodimethyldicyclohexylmethane, 4,4'-Diaminodiphenylmethan, Diethyl-toluylendiamin, bevorzugt jedoch bei Raumtemperatur flüssige Amine und tricyclische Diamine. Ebenso können auch aromatische Amine wie 4,4'-Methylen-bis(2-chloranilin) eingesetzt werden. Das Äquivalentverhältnis zwischen NH2- und blockierten NCO-Gruppen in der Reaktionsmasse liegt vorteilhafterweise zwischen 1,1:1,0 und 0,7:1,0, vorzugsweise zwischen 1,0:1,0 und 0,8:1,0, besonders bevorzugt bei ca. 0,9:1,0.

Es entspricht einer weiteren bevorzugten Ausführungsform der Erfindung, wenn zur Herstellung der porösen Polyurethanschicht eine Komponente mit mindestens 2 isocyanat-reaktiven Gruppen, bevorzugt eine Polyol-Komponente, ein Katalysator sowie ein Polyisocyanat und/oder ein Polyisocyanat-Prepolymer eingesetzt werden. Dabei wird der Katalysator insbesondere über die Polyol-Komponente eingebracht. Geeignete Polyol-Komponenten, Katalysatoren sowie Polyisocyanate und/oder Polyisocyanat-Prepolymere werden weiter unten beschrieben.

Im Rahmen der erfindungsgemäßen Herstellung der porösen Polyurethanschicht können die dabei eingesetzten Reaktionsmassen gewünschtenfalls auch noch weitere Bestandteile umfassen, wie z.B. Polymerdispersion, Polyamine, Pigmente oder andere färbgebende Mittel, UV-Stabilisatoren, Antioxidantien, griffbeeinflussende Mittel wie Silicone, Celluloseester, Füllstoffe wie Kreide oder Schwerspat, usw. Geeignete Polymerdispersionen sind beispielsweise Polyurethandispersionen, wässrige Latices von Homo- und Copolymeren von Vinylmonomeren und gegebenenfalls Dienen sowie auch wässrige Dispersionen von Nitrozelluloselösungen, wie sie aus der Lederzurichtung an sich bekannt sind. Erfindungsgemäß bevorzugte Polymerdispersionen sind z.B. solche aus Acrylsäurebutylester, Styrol, Acrylnitril, Acrylamid, Acrylsäure und N-Methylolacrylamid sowie gegebenenfalls Butadien. Erfindungsgemäß einsetzbare Polymerisatlatices können z.B. aus folgenden Monomeren aufgebaut sein: Acryl- und Methacrylsäureester des Methanols, Ethanols oder Butanols, Vinylchlorid, Vinylidenchlorid, Vinylacetat, Vinylalkohol (durch partielle Verseifung von Polyvinylacetat), Ethylen, Propylen, Acrylnitril, Styrol, Butadien, Isopren, Chloropren; ferner Acrylamid, N-Methylolacrylamid, Methacrylamid, Acrylsäure und Methacrylsäure.

Ein weiterer Gegenstand der Erfindung ist ein Verfahren zur Herstellung poröser Polyurethanschichten, wobei die Schichtdicke im Bereich von 0,05 bis 5 mm, vorzugsweise 0,1 bis 3 mm und insbesondere 0,15 bis 1 mm liegt,
bei welchem eine zur Bildung eines Polyurethans fähige reaktive Masse, enthaltend chemisch blockierte, vorzugsweise Oxim-blockierte, NCO-Prepolymere und Vernetzer, vorzugsweise umfassend aliphatische und/oder cycloaliphatische und/oder aromatische Aminen mit mindestens 2 primären und/oder sekundären Aminogruppen, zur Reaktion gebracht wird,
wobei die zur Bildung der porösen Polyurethanschicht führende Reaktion in Gegenwart einer siliziumhaltigen Verbindung der Formel (1) erfolgt.

Ein weiterer Gegenstand der Erfindung ist ein Verfahren zur Herstellung poröser Polyurethanschichten, wobei die Schichtdicke im Bereich von 0,05 bis 5 mm, vorzugsweise 0,1 bis 3 mm und insbesondere 0,15 bis 1 mm liegt,
bei welchem eine zur Bildung eines Polyurethans fähige reaktive Masse, welche

i) ein Polyol mit primären und/oder sekundären endständigen Hydroxyfunktionalitäten,
ii) ein Polyisocyanat und/oder einen Polyisocyanat-Prepolymer, und
iii) einen Katalysator

enthält, zur Reaktion gebracht wird,
wobei die zur Bildung der porösen Polyurethanschicht führende Reaktion in Gegenwart einer siliziumhaltigen Verbindung der Formel (1) erfolgt.

Ein weiterer Gegenstand der Erfindung ist eine poröse Polyurethanschicht, erhältlich nach der erfindungsgemäßen Verwendung oder dem erfindungsgemäßen Verfahren. Die Dicke der Polyurethanschicht liegt im Bereich von 0,05 bis 5 mm, vorzugsweise 0,1 bis 3 mm und insbesondere 0,15 bis 1 mm. Die Gesamtmenge der eingesetzten siliziumhaltigen Verbindung(en) der Formel (1) bezogen auf das fertige Polyurethan beträgt vorzugsweise 0,01 bis 10 Gew.-%, bevorzugt 0,1 bis 3 Gew.-%.

Ein weiterer Gegenstand der Erfindung ist ein Verfahren zur Herstellung eines Verbundgebildes, umfassend mindestens eine poröse Polyurethanschicht sowie eine Trägerschicht,
wobei die mindestens eine poröse Polyurethanschicht unmittelbar oder mittelbar auf eine Trägerschicht aufgebracht wird, und wobei die mindestens eine Polyurethanschicht dadurch ausgebildet wird, das eine zur Bildung eines Polyurethans fähige reaktive Masse auf die Trägerschicht aufgebracht und ausgehärtet wird,

wobei die Bildung der porösen Polyurethanschicht in Gegenwart einer siliziumhaltigen Verbindung der Formel (1) erfolgt, wobei die Dicke der Polyurethanschicht im Bereich von 0,05 bis 3 mm liegt.

Im Rahmen des erfindungsgemäßen Verfahrens können, insbesondere wenn keine chemische Verschäumung erfolgt, hochscherende Rühr- oder Dispergieraggregate zum Einsatz kommen, um die notwendige Gasmenge in das Reaktionsgemisch einzutragen. Solche Rühr- oder Dispergieraggregate sind dem Fachmann gut bekannt. Dies können z.B. Verschäumungsmaschinen der Hersteller Hansa, Oaxes, Ultraturrax, etc. sein oder entsprechende modifizierte Laborrührer sein, die der Fachmann anhand weniger Routineversuche wählen kann.

Ein weiterer Gegenstand der Erfindung ist ein Verfahren zur Herstellung poröser Polyurethanschichten, wobei die Schichtdicke im Bereich von 0,05 bis 5 mm, vorzugsweise 0,1 bis 3 mm und insbesondere 0,15 bis 1 mm liegt, bei welchem eine zur Bildung eines Polyurethans fähige reaktive Masse auf ein Trägermaterial flächig aufgebracht wird, und wobei die Bildung der porösen Polyurethanschicht in Gegenwart einer siliziumhaltigen Verbindung der Formel (1) erfolgt.

Das flächige Aufbringen kann vorzugsweise durch Rakeln bewerkstelligt werden, was dem Fachmann an sich bekannt ist. Mit einer Rakel läßt sich auf relativ einfache Weise eine Schicht definierter Dicke, z.B. vorgegeben durch den Rakelspalt, erzeugen. Man spricht dabei vom Aufrakeln.

Geeignete Trägerschichten sind dem Fachmann an sich bekannt und er kann auf alle bewährten zurückgreifen z.B. Folien, Gewebe, Gewirke oder vergleichbares aus Metallen, Kunststoffen oder auch Naturfasern. Insbesondere sind Naturfaser-, Chemiefaser- sowie Mischgewebe als Trägerschicht bevorzugt einsetzbar.

Bevorzugte poröse PU-Schichten im Sinne der vorliegenden Erfindung haben eine Dichte in $kg/m^3$ im Bereich von vorzugsweise 100 bis 1200, insbesondere 200 bis 1000, sowie vorteilhafterweise einen Zellanteil in % von vorzugsweise 20 bis 90, insbesondere 30 bis 80 %. Dies entspricht einer bevorzugten Ausführungsform der Erfindung. Diese bevorzugte Ausführungsform betrifft auch die erfindungsgemäßen Verwendungen, die Verfahren zur Herstellung der Verbundgebilde und die Verbundgebilde, jeweils mit Blick auf die bevorzugten porösen PU-Schichten.

Dass die poröse Polyurethanschicht unmittelbar auf eine Trägerschicht aufgebracht wird, bedeutet, dass diese beiden Schichten ohne Zwischenschicht aneinander haften. Dass die poröse Polyurethanschicht mittelbar auf eine Trägerschicht aufgebracht wird, bedeutet, dass diese beiden Schichten nicht direkt miteinander Kontakt haben, sondern durch eine Zwischenschicht, z.B. durch eine Klebstoffschicht miteinander verbunden sind.

Ein erfindungsgemäß bevorzugter Aufbau eines Verbundgebildes umfasst in Reihenfolge eine Textilschicht/ Haftschicht/ poröse Polyurethanschicht / ungeschäumte Deckschicht(en). Hierzu wird auf EP 1059379 A2 verwiesen, wo entsprechende Verbundgebilde beschrieben sind.

Gemäß einer bevorzugten Ausführungsform der Erfindung zeichnet sich das erfindungsgemäße Verfahren zur Herstellung eines Verbundgebildes dadurch aus, dass die zur Bildung eines Polyurethans fähige reaktive Masse chemisch blockierte, vorzugsweise Oxim-blockierte, NCO-Prepolymere und Vernetzer, vorzugsweise umfassend aliphatische und/oder cycloaliphatische und/oder aromatische Aminen mit mindestens 2 primären und/oder sekundären Aminogruppen, umfasst.

Gemäß einer weiteren bevorzugten Ausführungsform der Erfindung zeichnet sich das erfindungsgemäße Verfahren zur Herstellung eines Verbundgebildes dadurch aus, dass die zur Bildung eines Polyurethans fähige reaktive Masse

i) ein Polyol mit primären und/oder sekundären endständigen Hydroxyfunktionalitäten,
ii) ein Polyisocyanat und/oder einen Polyisocyanat-Prepolymer, und
iii) einen Katalysator

umfasst.

Ein weiterer Gegenstand der Erfindung ist ein Verbundgebilde, umfassend mindestens eine poröse Polyurethanschicht, wie zuvor im Sinne dieser Erfindung beschrieben, sowie eine Trägerschicht, wobei beide Schichten mittelbar oder unmittelbar miteinander verbunden sind.

Ein weiterer Gegenstand der Erfindung ist ein Verbundgebilde, erhältlich gemäß dem erfindungsgemäßen Verfahren wie zuvor beschrieben.

Ein weiterer Gegenstand der Erfindung ist die Verwendung des erfindungsgemäßen Verbundgebildes, wie zuvor beschrieben, als Kunstleder oder als Schaumfolie.

Ein weiterer Gegenstand der Erfindung ist die Verwendung von siliziumhaltigen Verbindungen der Formel (1) bei der Herstellung von porösen Polyurethanschichten, insbesondere wie zuvor beschrieben, zur Verbesserung der Verlaufseigenschaften der zur Polyurethanschicht reagierenden Reaktionsmasse und/oder zur Zelloptimierung des resultierenden Polyurethanschicht, vorzugsweise zur Homogenisierung der Zellstruktur über die gesamte resultierende Polyurethanschicht, insbesondere im Rahmen der Kunstleder- oder Schaumfolienherstellung,wobei die Dicke der Polyurethanschicht im Bereich von 0,05 bis 3 mm liegt.

Die erfindungsgemäßen Gegenstände werden nachfolgend beispielhaft beschrieben, ohne dass die Erfindung

auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Bei Prozentangaben handelt es sich, wenn nicht anders angegeben, um Angaben in Gewichtsprozent. Werden nachfolgend Mittelwerte angegeben, so handelt es sich, wenn nicht anders angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden, Polyurethan auch weitere funktionelle Gruppen gebildet werden, wie z.B. Allophanate, Biurete, Harnstoffe, Carbodiimide, Uretdione, Isocyanurate oder Uretimine.

Die erfindungsgemäß einzusetzenden Verbindungen der Formel (1), in Gesamtmenge, werden vorzugsweise in einem Massenanteil von 0,01 bis 20,0 Teilen (pphp), bevorzugt 0,01 bis 5,00 Teilen und besonders bevorzugt 0,05 bis 3,00 Teilen bezogen auf 100 Teile (pphp) Polyolkomponente eingesetzt.

Als Isocyanatkomponenten werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Besonders bevorzugt werden Isocyanate in einem Bereich von 60 bis 200 mol% relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexahydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Naphthalindiisocyanat, Diethyltoluoldiisocyanat, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden. Ebenso können entsprechende "Oligomere" der Diisocyanate eingesetzt werden (IPDI-Trimer auf Basis Isocyanurat, Biurete- Urethdione.) Des Weiteren ist der Einsatz von Prepolymeren auf Basis der oben genannten Isocyanate möglich.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind beispielsweise in EP 1 712 578, EP 1 161 474, WO 00/58383, US 2007/0072951, EP 1 678 232 und der WO 2005/085310 aufgeführt, auf die hier in vollem Umfang Bezug genommen wird.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Beschichtungen, Polyurethan-Elastomeren oder auch Schaumstoffen; üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000. Üblicherweise

kommen die Polyole mit OH-Zahlen im Bereich von 10 bis 1200 mgKOH/g zum Einsatz.

Polyetherpolyole können nach bekannten Verfahren hergestellt werden, beispielsweise durch anionische Polymerisation von Alkylenoxiden in Gegenwart von Alkalihydroxiden, Alkylialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Bortrifluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl usw., höhere polyfunktionelle Polyole, insbesondere Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung

Polyesterpolyole basieren auf Estern mehrwertiger aliphatischer oder aromatischer Carbonsäuren, bevorzugt mit 2 bis 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Trimethylolpropan und Glycerin erhalten.

Polyetherpolycarbonatpolyole sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von $CO_2$ als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von CO2 und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Polyole auf Basis nachwachsender Rohstoffe "Natural oil based polyols" (NOPs) zur Herstellung von Polyurethanschäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO 2004/020497, US 2006/0229375, WO 2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (WO 2004/020497, US 2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO 2009/058367).

Eine weitere Klasse von einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Eine weitere Klasse von einsetzbaren Polyolen sind solche, die als Prepolymere durch Umsetzung von Polyol mit Isocyanat in einem Molverhältnis von 100 zu 1 bis 5 zu 1, bevorzugt 50 zu 1 bis 10 zu 1, erhalten werden. Solche Prepolymere werden vorzugsweise gelöst in Polymer angesetzt, wobei das Polyol bevorzugt dem zur Herstellung der Prepolymeren eingesetzten Polyol entspricht.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 350. Ein Index von 100 steht für ein molares Verhältnis der reaktiven Gruppen von 1 zu 1.

Geeignete Katalysatoren im Sinne der vorliegenden Erfindung sind alle Verbindungen, die in der Lage sind die Reaktion von Isocyanaten mit OH- Funktionen, NH-Funktionen oder anderen isocyanat-reaktiven Gruppen zu beschleunigen. Hierbei kann auf die üblichen aus dem Stand der Technik bekannten Katalysatoren zurückgegriffen werden, umfassend z.B. Amine (cyclische, acyclische; Monoamine, Diamine, Oligomere mit einer oder mehreren Aminogruppen), metallorganische Verbindungen und Metallsalze, vorzugsweise die des Zinn, Eisen, Wismut und Zink. Insbesondere können als Katalysatoren Gemische mehrerer Komponenten eingesetzt werden.

Die Verwendung von Treibmitteln ist optional, je nachdem welches Verschäumungsverfahren verwendet wird. Beim mechanischen Aufschäumen wird über spezielle Rühraggregate ein inertes Gas (Luft, Stickstoff, Kohlendioxid) in die Reaktionsmischung eingebracht, so dass hier auch ohne weitere physikalische oder chemische Treibmittel gearbeitet werden kann.

Es kann aber auch mit chemischen und physikalischen Treibmitteln gearbeitet werden.

Die Wahl des Treibmittels hängt hier stark von der Art des Systems ab. So werden bei blockierten High Solid-Systemen üblicherweise Feststoffe eindispergiert, die sich bei den Aushärtungstemperaturen von 140 bis 180°C zersetzen und somit für eine Bildung von Zellen sorgen. Auch verkapselte Treibmittel wie zum Beispiel "Microspheres" von Akzo Nobel finden Verwendung.

Wenn die Aushärtung bei tieferen Temperaturen stattfindet, können entsprechende Verbindung mit passenden Siedepunkten eingesetzt werden. Ebenso können chemische Treibmittel eingesetzt werden, die mit NCO-Gruppen und Freisetzung von Gase reagieren, wie beispielsweise Wasser oder Ameisensäure.

Beispiele für Treibmittel sind verflüssigtes $CO_2$, und leichtflüchtige Flüssigkeiten, beispielsweise Kohlenwasserstoffe mit 3, 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Hydrofluoroolefine (HFO) oder Hydrohaloolefine wie z.B. 1234ze, 1233zd(E) oder 1336mzz, Sauerstoff-haltige Verbindungen wie Methylformiat, Aceton und Dimethoxymethan, oder Chlorkohlenwasserstoffe, bevorzugt Dichlormethan und 1,2-Dichlorethan.

Als Zusatzstoffe können alle nach dem Stand der Technik bekannten Substanzen verwendet werden, die bei der Herstellung von Polyurethanen, insbesondere von Polyurethanschaumstoffen, Verwendung finden, wie zum Beispiel Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren,

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

## Beispiele

### Verwendete Materialien

Erfindungsgemäße Polyethersiloxane
Impranil® HS 62 der Fa. Bayer Materialscience
Imprafix® HS-C der Fa. Bayer Materialscience
Voranol® CP 3322 der Firma DOW (Polyethertriol mit der OH-Zahl 47 mgKOH/g)
Arcol® 1374 der Fa. Bayer Materialscience (Polyetherpolyol mit OH-Zahl 28 mgKOH/g)
Polyether PPG 2470 der Fa Evonik Industries AG
Kosmos® 54 von Fa. Evonik Industries AG (Katalysator auf Basis von Zinkricinoleat)
Monoethylenglykol der Fa. Dow
Desmophen® 2200 der Fa. Bayer Materialscience (aliphatisches Polycarbonatdiol)
Desmodur® VP PU 0129 der Fa. Bayer Materialscience (Mischung aus 60% 2,4’-Diphenylmethandiisocyanat und 40% 4,4’Diphenylmethandiisocyanat)
Desmodur® 44V20L der Fa. Bayer Materialscience (Gemisch von Diphenylmethan-4,4’-diisocyanat (MDI) mit Isomeren und höherfunktionellen Homologen)
Silikonisiertes Trennpapier der Fa. Sappi
Desmodur® T 80 (TDI) von Bayer Materialscience (2,4- und 2,6-Toluylendiisocyanat (TDI) im Verhältnis von 80 : 20)

**Beispiel 1: Herstellung der Siloxane**

Erfindungsgemäße Siloxane der Formel (1) werden nach den im Stand der Technik bekannten Verfahren durch Umsetzung mit entsprechenden Wasserstoffsiloxanen durch Hydrosilylierung hergestellt. Es wurden Allylpolyether, Vinylpolyether, Olefine und auch Verbindungen mit mehreren ungesättigten Gruppen zu Verbindungen gemäß Formel I umgesetzt. Die Herstellung erfolgte verfahrensanalog zu Beispiel 7 aus DE 1020070554852 und damit übereinstimmend mit dem Stand der Technik zur Herstellung von SiC-verknüpften Polyethersiloxanen, wie beispielsweise auch in der EP 1520870 und EP 0867465 beschrieben ist.

In Tabelle 1 sind die verwendeten Polyether zusammengefasst.

Tabelle 1: Zur Herstellung der Verbindungen in Tabelle 2 verwendete Polyether (x = EthylenoxidEinheiten , y= Propylenoxid-Einheiten, R" = Endgruppe)

| Polyether | Starter | R" | x = | y = |
|---|---|---|---|---|
| PE 1 | Allylalkohol | - H | 12 | 0 |
| PE 2 | Allylalkohol | - H | 10 | 2 |
| PE 3 | Allylalkohol | - H | 12,5 | 3,5 |
| PE 4 | Allylalkohol | - H | 14,5 | 7 |
| PE 5 | Hydroxyethylvinylether | - $CH_3$ | 16 | 8 |
| PE 6 | Allylalkohol | - Me | 12,7 | 13,5 |
| PE 7 | Allylalkohol | - H | 20 | 4,5 |
| PE 8 | Allylalkohol | - $CH_3$ | 10 | 0 |
| PE 9 | Allylalkohol | - H | 35,5 | 37,5 |
| PE 10 | Allylalkohol | - H | 3,7 | 20,4 |
| PE 11 | Allylalkohol | - Me | 9,8 | 15,7 |
| PE 12 | Allylalkohol | - Me | 14,2 | 3,8 |
| PE 13 | Allylalkohol | - H | 35,5 | 37,5 |
| PE 14 | Allylalkohol | - H | 10,7 | 8,2 |

Die Struktur der erhaltenen Siloxan-Verbindungen (SV) kann Tabelle 2 entnommen werden. Die in Tabelle 2 aufgeführten Parameter beziehen sich auf die oben genannte Formel (1).

Tabelle 2: Zusammensetzungen der siliziumhaltigen Verbindungen (SV) der Formel (1). SV 7, 18-21, 27 und 28 sind keine erfindungsgemäßen Verbindungen.

| SV | R | $\sum a$ | $R^1$ | $R^4$ | $\sum b$ | $\sum c$ | $\sum d$ | $R^2$ |
|---|---|---|---|---|---|---|---|---|
| Vgl.2 | $CH_3$ | 4 | PE 8 PE 12 )[3] | $CH_3$ | 4 | 0 | 0 | R |
| Vgl.3 | $CH_3$ | 20 | PE 12 | $CH_3$ | 5 | 0 | 0 | R |
| 1 | $CH_3$ | 38 | PE 1 | $CH_3$ | 10 | 0 | 0 | R |
| 2 | $CH_3$ | 20 | PE 1 | $CH_3$ | 2 | 0 | << 0,1 | R |
| 3 | $CH_3$ | 18 | PE 3 | $CH_3$ | 0 | 0 | << 0,1 | $R^1$ |
| 4 | $CH_3$ | 18 | PE 1 | $CH_3$ | 5 | 0 | << 0,1 | $R^1$ |
| 5 | $CH_3$ | 71 | PE 9 PE 11 PE 13)[1] | $CH_3$ | 4 | 0 | << 0,1 | R |

(fortgesetzt)

| SV | R | ∑a | $R^1$ | $R^4$ | ∑b | ∑c | ∑d | $R^2$ |
|---|---|---|---|---|---|---|---|---|
| 6 | $CH_3$ | 38 | PE 2 PE 7 PE 14 )[2] | $CH_3$ | 10 | 0 | 0 | R |
| 7 | $CH_3$ | 42 | PE 6 V1)[4] | $CH_3$ | 6 | 0 | 0 | R |
| 8 | $CH_3$ | 8 | PE 8 PE 12)[5] | $CH_3$ | 10 | 0 | 0 | R |
| 9 | $CH_3$ | 50 | PE 4)[6] | $CH_3$ | 8 | 0 | << 1 | $R^1$ |
| 10 | $CH_3$ | 50 | PE 5 | $CH_3$ | 8 | 0 | << 1 | R |
| 11 | $CH_3$ | 75 | PE 6 PE 9 PE 10)[7] | $CH_3$ | 3 | 0 | << 1 | $R^1$ |
| 12 | $CH_3$ | 65 | PE 6 PE 9 )[8] | $CH_3$ | 5 | 0 | << 1 | $R^1$ |
| 13 | $CH_3$ | 40 | PE 8 | $CH_3$ | 5 | 0 | << 1 | R |
| 14 | $CH_3$ | 40 | PE 4 | $CH_3$ | 3 | 0,5 | 2 | $R^1$ |
| 15 | $CH_3$ | 40 | PE 3 PE 4)[9] | $CH_3$ | 3 | 0 | 1 | R |
| 16 | $CH_3$ | 40 | PE 6 | $C_8H_{17}$ | 3 | 0,5 | 2 | $R^1$ |
| 17 | $CH_3$ | 55 | PE 5 | $CH_3$ | 6 | 0,5 | 2 | $R^1$ |
| 18 | $CH_3$ | 42 | PE 6 V1)[17] | $CH_3$ | 6 | 0 | 0 | R |
| 19 | $CH_3$ | 71 | PE 11 PE 13 V 2)[10] | $CH_3$ | 4 | 0 | << 0,1 | R |
| 20 | $CH_3$ | 42 | PE 4 V1)[11] | $CH_3$ | 6 | 0 | 0 | R |
| 21 | $CH_3$ | 42 | PE 3 V1)[12] | $CH_3$ | 6 | 0 | 0 | R |
| 22 | $CH_3$ | 20 | PE 1 | $CH_3$ | 1 | 0 | << 0,1 | $R^1$ |
| 23 | $CH_3$ | 42 | PE 4 PE 6)[13] | $CH_3$ | 6 | 0 | 0 | R |
| 24 | $CH_3$ | 42 | PE 6 | $CH_3$ | 6 | 0 | 0 | R |
| 25 | $CH_3$ | 42 | PE 10 | $CH_3$ | 6 | 0 | 0 | R |
| 26 | $CH_3$ | 62 | PE 1 PE 7)[14] | $CH_3$ | 6 | 0 | 0 | R |
| 27 | $CH_3$ | 20 | PE 1 V1)[15] | $CH_3$ | 2 | 0 | << 0,1 | $R^1$ |

(fortgesetzt)

| SV | R | ∑a | $R^1$ | $R^4$ | ∑b | ∑c | ∑d | $R^2$ |
|---|---|---|---|---|---|---|---|---|
| 28 | $CH_3$ | 20 | PE 6 V1)15 | $CH_3$ | 2 | 0 | << 0,1 | $R^1$ |

)1 Gemisch bestehend aus 10 Äq.-% PE 9 + 60 Äq.-% PE 11 + 30 Äq.-% PE 13
)2 Gemisch bestehend aus 30 Äq.-% PE 2 + 25 Äq.% PE 7 45 Äq.% PE 14
)3 Gemisch bestehend aus 50 Äq.-% PE 8 + 50 Äq.% PE 12
)4 Gemisch bestehend aus 90 Äq.-% PE 6 + 10 Äq.% V 1 (Vernetzer 1: Trimetylolpropandiallylether)
)5 Gemisch bestehend aus 70 Äq.-% PE 8 + 30 Äq.% PE 12
)6 Gemisch bestehend aus 80 Äq.-% PE 4 + 20 Äq.% C16-Olefin
)7 Gemisch bestehend aus 60 Äq.-% PE 6 + 20 Äq.% PE 9 20 Äq.% PE 10
)8 Gemisch bestehend aus 60 Äq.-% PE 6 + 40 Äq.% PE 9
)9 Gemisch bestehend aus 50 Äq.-% PE 3 + 50 Äq.% PE 4
)10 Gemisch bestehend aus 10 Äq.-% V 2 + 60 Äq.-% PE 11 + 30 Äq.-% PE 13 ; (Vernetzer 2: Polyethylenglykol-Diallylether, MW=400)
)11 Gemisch bestehend aus 90 Äq.-% PE 4 + 10 Äq.% V 1 (Vernetzer 1: Trimetylolpropandiallylether)
)12 Gemisch bestehend aus 90 Äq.-% PE 3 + 10 Äq.% V 1 (Vernetzer 1: Trimetylolpropandiallylether)
)13 Gemisch bestehend aus 50 Äq.-% PE 6 + 50 Äq.% PE 4
)14 Gemisch bestehend aus 50 Äq.-% PE 1 + 50 Äq.% PE 7
)15 Gemisch bestehend aus 90 Äq.-% PE 1 + 10 Äq.% V 1 (Vernetzer 1: Trimetylolpropandiallylether)
)16 Gemisch bestehend aus 90 Äq.-% PE 6 + 10 Äq.% V 1 (Vernetzer 1: Trimetylolpropandiallylether)
)17 Gemisch bestehend aus 80 Äq.-% PE 6 + 20 Äq.% V 1 (Vernetzer 1: Trimetylolpropandiallylether) In den Vergleichsbeisspielen werden verwendet:
Vgl.1: Dow Corning DC 193 = Polyethermodifiziertes Methylpolysiloxan
Vgl.4: Baysilon® OL 17 = Polyethermodifiziertes Methylpolysiloxan
Vgl. 5: ohne Si-haltige Verbindung

## Verwendete Methoden

### Einwaagen

Alle Einwaagen wurden mit einer Sartorius CPA 3202S durchgeführt.

### Mechanisches Schäumen

Die Ansätze wurden mit einem Rührer geschäumt, so dass eine besonders gute Einarbeitung von Luftblasen gewährleitstet war.

### Viskositätsbestimmung

Die Viskositäten wurden mit einem Brookfield Digital Viscometer bestimmt. Es wurde eine Spindel LV 4 bei 6 U/min verwendet. Bei Viskositäten über 100 000 *mPa • s* wurden 3 U/min verwendet.

### Herstellung der porösen Polyurethanschichten

Die Filme wurden mit einem Filmziehgerät AB 3320 der Firma TQC gezogen.

### Trocknung

Für die Trocknung wurden Trockenschränke, der Firmen Heraeus und Binder verwendet.

### Filmdickenbestimmung

Die Filmdicke wurde mit einem digitalen Messschieber, Holex 41 2811 150, gemessen. Die Messung erfolgt an fünf, gleichmäßig über den Film verteilten, Stellen. Von den Ergebnissen der fünf Wiederholungen wurde das arithmetische Mittel errechnet und als Messergebnis angegeben.

**Flächengewichtsbestimmung**

Die Länge und Breite der Filme wurde mit einem Lineal gemessen und die Masse mit einer Sartorius CPA 3202S bestimmt. Das Flächengewicht wurde nach folgender Gleichung berechnet (Länge *l*, Breite *b*, Masse *m*).

$$m_A = \frac{m}{l \cdot b}$$

**Schaumdichtebestimmung**

Von den hergestellten Filmen wurde die Dicke d gemessen. Daraus wurde die Dichte der Filme $\rho_{Film}$ berechnet:

$$\rho_{Film} = \frac{m_A}{d}$$

**Zellanteil**

Ist die Dichte des ungeschäumten Polyurethans $\rho_{Bulk}$ bekannt, kann der prozentuale Zellanteil Z berechnet werden:

$$Z = \left(1 - \frac{\rho_{Film}}{\rho_{Bulk}}\right) * 100\%$$

Gegebenenfalls wurde die Dichte der Rohstoffe In Anlehnung an DIN 51757 bestimmt.

**Mechanische Daten der hergestellten Filme**

Für die Bestimmung der mechanischen Kennwerte wurden Probenkörper gemäß Abb. 1 aus den Filmen gestanzt.

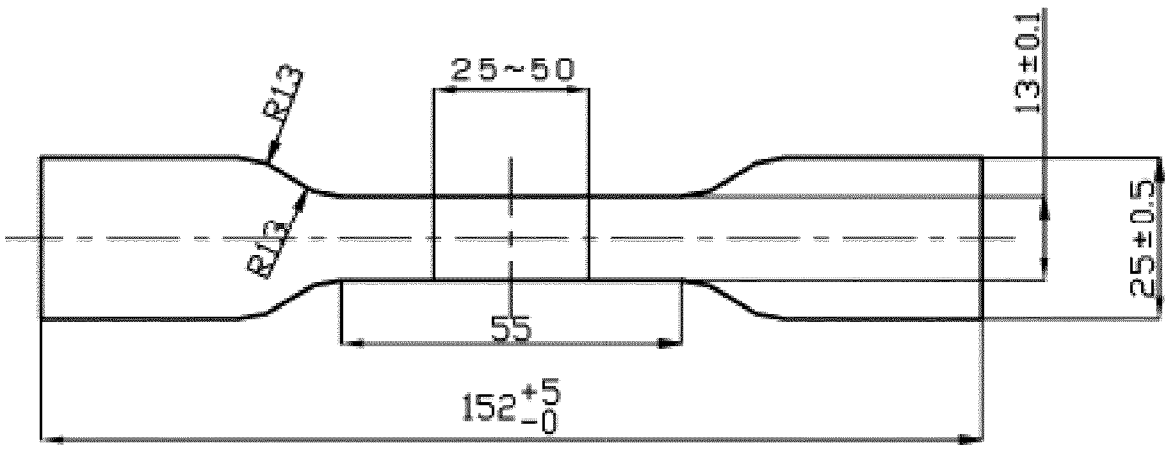


Abb. 1 Probenkörper, Längenangaben in mm

Die Messung wurde mit einer Zwick Roell Z010 Zugmaschine und einer Zwick Roell KAF-TC Kraftdose (Nennlast 5 kN) durchgeführt. Die Probe wurde mit einer Vorschubgeschwindigkeit von 500 mm/min gezogen. Die Dehnung wurde mittels Langwegaufnehmer, bei einer Ausganglänge von 30 mm, aufgenommen. Es wurden die Bruchspannung $\sigma_{br}$ die Bruchdehnung $\varepsilon_{br}$ und die Spannung bei 100 % Dehnung $\sigma_{100\%}$ bestimmt.

Es wurde jeweils eine Fünffachbestimmung durchgeführt. Die Messergebnisse wurden arithmetisch gemittelt.

**Rasterelektronenmikroskopie (REM)**

Die Bilder für die mikroskopische Beurteilung wurden mit einem Hitachi TM 3000 Rasterelektronenmikroskop bei 250-facher Vergrößerung aufgenommen.

**Makroskopische und mikroskopische Einschätzung**

Für die makroskopische Bewertung wurde die Oberfläche der Filme ohne Hilfsmittel betrachtet. Es wurden die Verlaufseigenschaften, die Zellhomogenität und die Flächenhomogenität mit Noten von 1 (schlecht) bis 5 (sehr gut) bewertet.

Für die mikroskopische Bewertung wurden mit einem Rasterelektronenmikroskop (REM) Bilder der Querschnitts der Filme aufgenommen. Es wurden die Zellhomogenität, die Zellgröße und die Offenzelligkeit bewertet.

Um die Einzelaspekte zu einem Wert für die Bewertung zusammen zu fassen, wurde die Summe der Quadrate der Einzelaspekte gebildet.

**Rezeptur 1: Allgemeine Rezeptur auf Basis verkappter Isocyanate**

1000 Teile Impranil® HS62, 69 Teile Imprafix® HS-C und 20 Teile der jeweiligen erfindungsgemäßen siliziumhaltigen Verbindung werden 3 min bei 1000 U/min mit dem oben genannten Rührer gerührt. Die Mischung wird 30 min ruhen gelassen.

**Weitere Rezepturen auf Basis nicht verkappter Isocyanate**

Die Bestandteile werden 2 min bei 2000 U/min mit dem oben genannten Rührer gerührt und anschließend sofort weiterverarbeitet.

Tabelle 3 Rezepturen auf Basis nicht verkappter Isocyanate

| Bestandteile | Rezeptur 2 | Rezeptur 3 | Rezeptur 4 | Rezeptur 5 |
|---|---|---|---|---|
| Voranol® CP 3322 | | | 50 | 90 |
| Arcol® 1374 | 50 | 50 | | |
| Kosmos® 54 | 0,2 | 0,2 | 0,2 | 0,2 |
| Monoethylenglykol | | 10 | | 10 |
| Desmophen® 2200 | 40 | | | |
| Polyether PPG 2470 | | 40 | 40 | |
| Desmodur® VP PU 0129 | | 54 | | |
| Dipropylenglykol | 10 | | 10 | |
| Desmodur® 44V20L | 28 | | 28 | |
| TDI | | | | 37 |
| Siloxan | 2 | 2 | 2 | 2 |

**Herstellung der porösen Polyurethanschichten**

Die Kastenrakel (300 und 600 μm Spalthöhe) wurden mit den Mischungen aus den Rezepturen auf Basis verkappter oder nicht verkappter Isocyanate gefüllt und mit dem Filmziehgerät bei einer Vorschubgeschwindigkeit von 30 mm/s Schichten auf Trennpapier poröse Polyurethanschichten gezogen. Die Schichten wurden 5 min bei 180 °C getrocknet. Nach dem Abkühlen wurden die Schichten mechanisch von dem Trennpapier entfernt.

**Analytik der porösen Polyurethanschichten**

Tabelle 4 Makroskopische Bewertung der Polyurethanschichten auf Basis verkappter Isocyanate .SV 7, 18-21, 27 und 28 sind keine erfindungsgemäßen Verbindungen.

| SV | Rezeptur | Verlaufseigenschaften | Zellhomogenität | Flächenhomogenität | ∑ Quadr. der makr. Bew. |
|---|---|---|---|---|---|
| 1 | 1 | 5 | 4 | 4 | 57 |
| 2 | 1 | 5 | 4 | 4 | 57 |
| 3 | 1 | 5 | 4 | 4 | 57 |
| 4 | 1 | 5 | 4 | 4 | 57 |
| 5 | 1 | 5 | 3 | 4 | 50 |
| 6 | 1 | 5 | 3 | 4 | 50 |
| 7 | 1 | 5 | 3 | 3 | 43 |
| 8 | 1 | 2 | 4 | 4 | 36 |
| Vgl. 1 | 1 | 4 | 2 | 3 | 29 |
| Vgl. 2 | 1 | 1 | 2 | 2 | 9 |
| Vgl. 3 | 1 | 1 | 2 | 2 | 9 |
| Vgl. 4 | 1 | 4 | 2 | 3 | 29 |
| Vgl. 5 | 1 | 1 | 3 | 2 | 14 |
| 9 | 1 | 5 | 3 | 4 | 50 |
| 10 | 1 | 5 | 4 | 3 | 50 |
| 11 | 1 | 5 | 4 | 3 | 50 |
| 12 | 1 | 4 | 3 | 4 | 41 |
| 13 | 1 | 4 | 3 | 5 | 50 |
| 14 | 1 | 4 | 3 | 4 | 41 |
| 15 | 1 | 4 | 5 | 2 | 45 |
| 16 | 1 | 4 | 4 | 4 | 48 |
| 17 | 1 | 5 | 4 | 2 | 45 |
| 18 | 1 | 4 | 3 | 4 | 41 |
| 19 | 1 | 5 | 4 | 3 | 50 |
| 20 | 1 | 4 | 3 | 4 | 41 |
| 21 | 1 | 5 | 3 | 5 | 59 |
| 22 | 1 | 4 | 4 | 3 | 41 |
| 23 | 1 | 5 | 5 | 3 | 59 |
| 24 | 1 | 5 | 4 | 2 | 45 |
| 25 | 1 | 5 | 4 | 4 | 57 |
| 26 | 1 | 4 | 3 | 4 | 41 |
| 27 | 1 | 4 | 4 | 3 | 41 |
| 28 | 1 | 5 | 4 | 4 | 57 |

Tabelle 5 Makroskopische Bewertung der Polyurethanschichten auf Basis nicht verkappter Isocyanate SV 7, 18-21, 27 und 28 sind keine erfindungsgemäßen Verbindungen.

| SV | Rezeptur | Verlaufseigenschaften | Zellhomogenität | Flächenhomogenität | ∑ Quadr. der makr. Bew. |
|---|---|---|---|---|---|
| 1 | 2 | 5 | 4 | 3 | 50 |
| 1 | 3 | 5 | 4 | 5 | 66 |
| 1 | 4 | 5 | 5 | 4 | 66 |
| 1 | 5 | 4 | 5 | 4 | 57 |
| 7 | 2 | 5 | 3 | 3 | 43 |
| 7 | 3 | 5 | 3 | 4 | 50 |
| 7 | 4 | 5 | 4 | 2 | 45 |
| 7 | 5 | 5 | 2 | 3 | 38 |
| 2 | 2 | 4 | 4 | 5 | 57 |
| 2 | 3 | 5 | 3 | 3 | 43 |
| 2 | 4 | 5 | 3 | 5 | 59 |
| 2 | 5 | 5 | 4 | 3 | 50 |
| Vgl. 1 | 2 | 3 | 3 | 2 | 22 |
| Vgl. 1 | 3 | 4 | 2 | 2 | 24 |
| Vgl. 1 | 4 | 3 | 2 | 3 | 22 |
| Vgl. 1 | 5 | 2 | 3 | 4 | 29 |
| Vgl. 5 | 2 | 2 | 3 | 4 | 29 |
| Vgl. 5 | 3 | 1 | 3 | 3 | 19 |
| Vgl. 5 | 4 | 1 | 2 | 3 | 14 |
| Vgl. 5 | 5 | 1 | 2 | 4 | 21 |
| 23 | 2 | 5 | 3 | 3 | 43 |
| 23 | 3 | 5 | 3 | 4 | 50 |
| 23 | 4 | 5 | 4 | 2 | 45 |
| 23 | 5 | 5 | 2 | 3 | 38 |
| 26 | 2 | 4 | 4 | 3 | 41 |
| 26 | 3 | 4 | 4 | 4 | 48 |
| 26 | 4 | 5 | 4 | 3 | 50 |
| 26 | 5 | 5 | 3 | 3 | 43 |

Tabelle 6 Mikroskopische Bewertung der Polyurethanschichten auf Basis verkappter Isocyanate

| SV 7, 18-21, 27 und 28 sind keine erfindungsgemäßen Verbindungen. | | | | | |
|---|---|---|---|---|---|
| SV | Rezeptur | Zellgröße | Zellhomogenität | Offenzelligkeit | ∑ Quadrate der mikr. Bew. |
| 1 | 1 | 2 | 3 | 3 | 22 |
| 2 | 1 | 4 | 3 | 1 | 26 |
| 3 | 1 | 4 | 2 | 2 | 24 |
| 4 | 1 | 4 | 3 | 3 | 34 |

(fortgesetzt)

| SV 7, 18-21, 27 und 28 sind keine erfindungsgemäßen Verbindungen. | | | | | |
|---|---|---|---|---|---|
| SV | Rezeptur | Zellgröße | Zellhomogenität | Offenzelligkeit | ∑ Quadrate der mikr. Bew. |
| 5 | 1 | 4 | 4 | 3 | 41 |
| 6 | 1 | 2 | 2 | 3 | 17 |
| 7 | 1 | 2 | 2 | 3 | 17 |
| 8 | 1 | 2 | 3 | 3 | 22 |
| Vgl.1 | 1 | 2 | 1 | 2 | 9 |
| Vgl.2 | 1 | 2 | 2 | 1 | 9 |
| Vgl. 3 | 1 | 2 | 2 | 2 | 12 |
| Vgl.4 | 1 | 2 | 1 | 1 | 6 |
| Vgl. 5 | 1 | 1 | 2 | 1 | 6 |
| 9 | 1 | 3 | 3 | 3 | 27 |
| 10 | 1 | 3 | 2 | 4 | 29 |
| 11 | 1 | 4 | 4 | 3 | 41 |
| 12 | 1 | 2 | 4 | 2 | 24 |
| 13 | 1 | 4 | 4 | 2 | 36 |
| 14 | 1 | 3 | 3 | 4 | 34 |
| 15 | 1 | 3 | 2 | 4 | 29 |
| 16 | 1 | 4 | 3 | 3 | 34 |
| 17 | 1 | 4 | 3 | 2 | 29 |
| 18 | 1 | 4 | 4 | 3 | 41 |
| 19 | 1 | 5 | 2 | 2 | 33 |
| 20 | 1 | 3 | 3 | 4 | 34 |
| 21 | 1 | 3 | 4 | 1 | 26 |
| 22 | 1 | 4 | 4 | 3 | 41 |
| 23 | 1 | 4 | 2 | 2 | 24 |
| 24 | 1 | 2 | 3 | 4 | 29 |
| 25 | 1 | 4 | 3 | 4 | 41 |
| 26 | 1 | 3 | 2 | 4 | 29 |
| 27 | 1 | 3 | 2 | 5 | 38 |
| 28 | 1 | 4 | 3 | 3 | 34 |

Tabelle 7 Mikroskopische Bewertung der Polyurethanschichten auf Basis nicht verkappter Isocyanate SV 7, 18-21, 27 und 28 sind keine erfindungsgemäßen Verbindungen.

| SV | Rezeptur | Zellgröße | Zellhomogenität | Offenzelligkeit | ∑ Quadr. der makr. Bew. |
|---|---|---|---|---|---|
| 1 | 2 | 5 | 5 | 4 | 66 |
| 1 | 3 | 5 | 4 | 4 | 57 |
| 1 | 4 | 5 | 4 | 3 | 50 |

(fortgesetzt)

| SV | Rezeptur | Zellgröße | Zellhomogenität | Offenzelligkeit | ∑ Quadr. der makr. Bew. |
|---|---|---|---|---|---|
| 1 | 5 | 4 | 5 | 4 | 57 |
| 7 | 2 | 4 | 4 | 5 | 57 |
| 7 | 3 | 4 | 5 | 3 | 50 |
| 7 | 4 | 5 | 4 | 5 | 66 |
| 7 | 5 | 5 | 4 | 3 | 50 |
| 2 | 2 | 3 | 4 | 4 | 41 |
| 2 | 3 | 4 | 3 | 3 | 34 |
| 2 | 4 | 4 | 4 | 5 | 57 |
| 2 | 5 | 5 | 4 | 3 | 50 |
| Vgl.1 | 2 | 3 | 2 | 2 | 17 |
| Vgl.1 | 3 | 2 | 2 | 4 | 24 |
| Vgl.1 | 4 | 2 | 1 | 3 | 14 |
| Vgl.1 | 5 | 3 | 2 | 3 | 22 |
| Vgl. 5 | 2 | 2 | 2 | 1 | 9 |
| Vgl. 5 | 3 | 2 | 3 | 1 | 14 |
| Vgl. 5 | 4 | 1 | 2 | 2 | 9 |
| Vgl. 5 | 5 | 1 | 2 | 3 | 14 |
| 23 | 2 | 5 | 5 | 4 | 66 |
| 23 | 3 | 5 | 4 | 4 | 57 |
| 23 | 4 | 5 | 4 | 3 | 50 |
| 23 | 5 | 4 | 5 | 4 | 57 |
| 26 | 2 | 4 | 4 | 5 | 57 |
| 26 | 3 | 4 | 5 | 3 | 50 |
| 26 | 4 | 5 | 4 | 5 | 66 |
| 26 | 5 | 5 | 4 | 3 | 50 |

Tabelle 8 Makroskopische Eckdaten der Polyurethanschichten auf Basis verkappter Isocyanate

| SV 7, 18-21, 27 und 28 sind keine erfindungsgemäßen Verbindungen. | | | | |
|---|---|---|---|---|
| SCV | Rezeptur | Flächengewicht in g/m$^2$ | Dichte in kg/m$^3$ | Zellanteil in % |
| 1 | 1 | 319 | 581 | 47 |
| 2 | 1 | 339 | 731 | 34 |
| 3 | 1 | 463 | 681 | 38 |
| 4 | 1 | 353 | 579 | 47 |
| 5 | 1 | 313 | 668 | 39 |
| 6 | 1 | 394 | 673 | 39 |
| 7 | 1 | 360 | 563 | 49 |
| 8 | 1 | 344 | 586 | 47 |

(fortgesetzt)

| SV 7, 18-21, 27 und 28 sind keine erfindungsgemäßen Verbindungen. | | | | |
|---|---|---|---|---|
| SCV | Rezeptur | Flächengewicht in $g/m^2$ | Dichte in $kg/m^3$ | Zellanteil in % |
| 9 | 1 | 498 | 830 | 25 |
| 10 | 1 | 364 | 579 | 47 |
| 11 | 1 | 464 | 622 | 43 |
| 12 | 1 | 332 | 738 | 33 |
| 13 | 1 | 244 | 678 | 38 |
| 14 | 1 | 219 | 730 | 34 |
| 15 | 1 | 286 | 656 | 40 |
| 16 | 1 | 394 | 673 | 39 |
| 17 | 1 | 323 | 662 | 40 |
| 18 | 1 | 339 | 581 | 45 |
| 19 | 1 | 410 | 594 | 46 |
| 20 | 1 | 456 | 662 | 40 |
| 21 | 1 | 490 | 754 | 31 |
| 22 | 1 | 363 | 558 | 49 |
| 23 | 1 | 273 | 635 | 42 |
| 24 | 1 | 278 | 621 | 44 |
| 25 | 1 | 463 | 747 | 32 |
| 26 | 1 | 368 | 679 | 38 |
| 27 | 1 | 323 | 584 | 47 |
| 28 | 1 | 308 | 657 | 40 |
| Vgl. 1 | 1 | 503 | 967 | 12 |
| Vgl. 2 | 1 | 251 | 900 | 18 |
| Vgl. 3 | 1 | 179 | 861 | 22 |
| Vgl. 4 | 1 | 324 | 774 | 30 |
| Vgl. 5 | 1 | 504 | 919 | 16 |

Tabelle 9 Makroskopische Eckdaten der Polyurethanschichten auf Basis nicht verkappter Isocyanate SV 7, 18-21, 27 und 28 sind keine erfindungsgemäßen Verbindungen.

| SV | Rezeptur | Flächengewicht in $g/m^2$ | Dichte in $kg/m^3$ | Zellanteil in % |
|---|---|---|---|---|
| 1 | 2 | 260 | 650 | 41 |
| 1 | 3 | 285 | 671 | 39 |
| 1 | 4 | 310 | 561 | 49 |
| 1 | 5 | 305 | 649 | 41 |
| 7 | 2 | 320 | 734 | 33 |
| 7 | 3 | 275 | 663 | 40 |
| 7 | 4 | 336 | 737 | 33 |
| 7 | 5 | 410 | 661 | 40 |

(fortgesetzt)

| SV | Rezeptur | Flächengewicht in g/m$^2$ | Dichte in kg/m$^3$ | Zellanteil in % |
|---|---|---|---|---|
| 2 | 2 | 342 | 697 | 37 |
| 2 | 3 | 298 | 683 | 38 |
| 2 | 4 | 313 | 683 | 38 |
| 2 | 5 | 346 | 676 | 39 |
| Vgl. 1 | 2 | 251 | 804 | 27 |
| Vgl. 1 | 3 | 263 | 824 | 25 |
| Vgl. 1 | 4 | 247 | 855 | 22 |
| Vgl. 1 | 5 | 256 | 921 | 16 |
| ohne | 2 | 186 | 899 | 18 |
| ohne | 3 | 203 | 923 | 16 |
| ohne | 4 | 186 | 877 | 20 |
| ohne | 5 | 181 | 862 | 22 |
| 23 | 2 | 321 | 682 | 38 |
| 23 | 3 | 316 | 652 | 41 |
| 23 | 4 | 331 | 643 | 42 |
| 23 | 5 | 309 | 636 | 42 |
| 26 | 2 | 362 | 662 | 40 |
| 26 | 3 | 379 | 661 | 40 |
| 26 | 4 | 354 | 636 | 42 |
| 26 | 5 | 321 | 682 | 38 |

Tabelle 10 Mechanische Eigenschaften der Polyurethanschichten auf Basis verkappter Isocyanate

| SV | Rezeptur | Spannung bei 100% Dehnung in MPa | Bruchspannung in MPa | Bruchdehnung in % |
|---|---|---|---|---|
| 1 | 1 | 1,34 | 1,69 | 142 |
| 6 | 1 | 0,88 | 1,38 | 180 |
| Vgl. 5 | 1 | 0,99 | 1,03 | 97 |

Die Ergebnisse der Vergleichsbeispiele liegen sowohl bei den makroskopischen und mikroskopischen Bewertungen, wie auch bei den mechanischen Eigenschaften sehr deutlich unter den Werten der erfindungsgemäßen Additive. Dies trifft auch auf die Zellanteile zu.

## Patentansprüche

1. Verwendung zumindest einer siliziumhaltigen Verbindung bei der Herstellung von porösen Polyurethanschichten, wobei die siliziumhaltige Verbindung der Formel (1) genügt

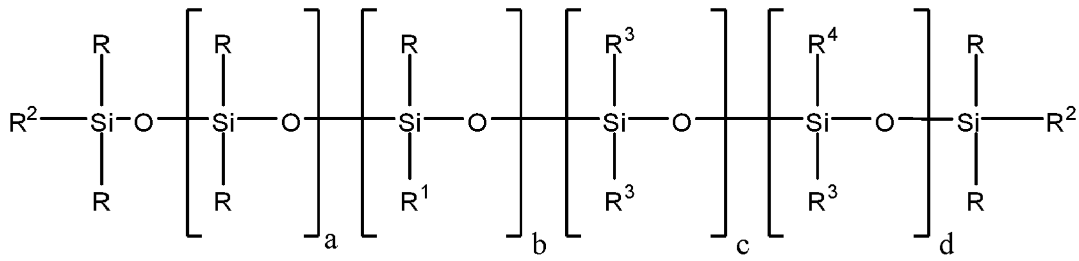

$R^3$ = 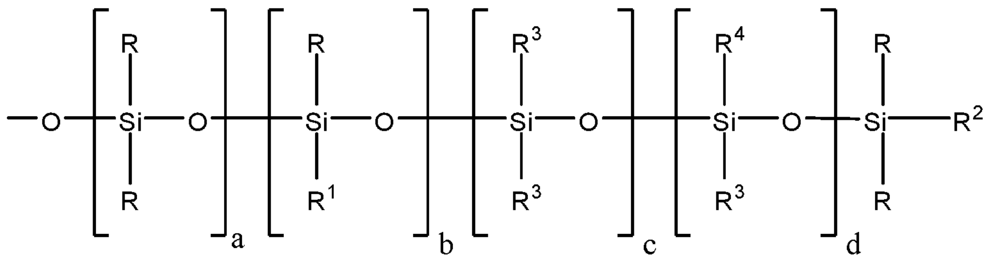

(1)

mit

a unabhängig voneinander 0 bis 500 ist, vorzugsweise 1 bis 300 und insbesondere 2 bis 150,
b unabhängig voneinander 0 bis 60 ist, vorzugsweise 1 bis 50 und insbesondere 1 bis 30,
c unabhängig voneinander 0 bis 10, vorzugsweise 0 oder > 0 bis 5, ist,
d unabhängig voneinander 0 bis 10, vorzugsweise 0 oder > 0 bis 5, ist,

mit der Maßgabe, dass pro Molekül der Formel (1) die mittlere Anzahl $\sum d$ der T-Einheiten und die mittlere Anzahl $\sum c$ der Q-Einheiten pro Molekül jeweils nicht größer als 50, die mittlere Anzahl $\sum a$ der D-Einheiten pro Molekül nicht größer als 2000 und die mittlere Anzahl $\sum b$ der $R^1$ tragenden Siloxy-Einheiten pro Molekül nicht größer als 100 ist,

R unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
$R^2$ unabhängig voneinander $R^1$ oder R ist,
$R^1$ ist ungleich R und unabhängig voneinander ist $R^1$ ein Rest ausgewählt aus der Gruppe

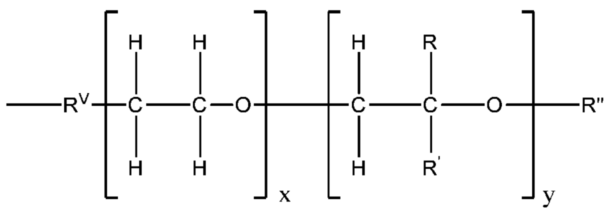

$-CH_2-CH_2-CH_2-O-(CH_2-CH_2O-)_x-(CH_2-CH(R')O-)_y-R''$

$-CH_2-CH_2-O-(CH_2-CH_2O-)_x-(CH_2-CH(R')O-)_y-R''$

$-O-(C_2H_4O-)_x-(C_3H_5O-)_y-R'$

$-CH_2-R^{IV}$

$-CH_2-CH_2-(O)_{x'}-R^{IV}$

$-CH_2-CH_2-CH_2-O-CH_2-CH(OH)-CH_2OH$

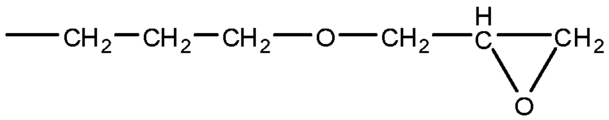

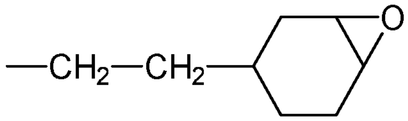

oder

$-CH_2-CH_2-CH_2-O-CH_2-C(CH_2OH)_2-CH_2-CH_3$ ist,

worin
x 0 bis 100, vorzugsweise > 0, insbesondere 1 bis 50,
x’ 0 oder 1,
y 0 bis 100, vorzugsweise > 0, insbesondere 1 bis 50,
R’ unabhängig voneinander eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist, wobei innerhalb eines Restes $R^1$ und/oder eines Moleküls der Formel (1) untereinander verschiedene Substituenten R’ vorliegen können, und
R" unabhängig voneinander ein Wasserstoffrest oder eine Alkylgruppe mit 1 bis 4 C-Atomen, eine Gruppe -C(O)-R’" mit R’" = Alkylrest, eine Gruppe $-CH_2-O-R'$, eine Alkylarylgruppe, wie z. B. eine Benzylgruppe, oder eine Gruppe -C(O)NH-R’ bedeutet,
$R^{IV}$ ein linearer, cyclischer oder verzweigter, ggf. substituierter, z. B. mit Halogenen substituierter, Kohlenwasserstoffrest mit 1 bis 50, vorzugsweise 9 bis 45, bevorzugt 13 bis 37 C-Atomen ist,
$R^V$ $-D-G_z-$
wobei D ein linearer, cyclischer oder verzweigter, ggf. substituierter, z. B. mit Heteroatomen wie O,N oder Halogenen substituierter, gesättigter oder ungesättigter Kohlenwasserstoffrest mit 2 bis 50, vorzugsweise 3 bis 45, bevorzugt 4 bis 37 C-Atomen ist, G einer der folgenden Formeln entspricht

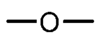 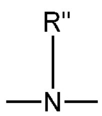 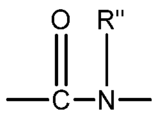 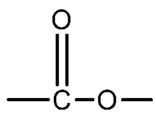

z gleich 0 oder 1 sein kann,
$R^4$ unabhängig voneinander R, $R^1$ und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxy-alkyl-, Methacryloxypropyl- oder Vinyl-Rest sein kann,

mit der Maßgabe, dass mindestens ein Substituent aus $R^1$, $R^2$ und $R^4$ nicht gleich R ist, wobei die Dicke der Polyurethanschicht im Bereich von 0,05 bis 3 mm liegt.

2. Verwendung nach Anspruch 1, wobei die Dicke der Polyurethanschicht im Bereich 0,1 bis 3 mm und insbesondere 0,15 bis 1 mm liegt.

3. Verwendung nach Anspruch 1 oder 2, **dadurch gekennzeichnet, dass** die Gesamtmenge der eingesetzten siliziumhaltigen Verbindung(en) der Formel (1) bezogen auf das fertige Polyurethan 0,01 bis 10 Gew.-%, bevorzugt 0,1 bis 3 Gew.-% beträgt.

4. Verwendung nach einem der Ansprüche 1 bis 3, **dadurch gekennzeichnet, dass** zur Herstellung der porösen Polyurethanschicht ein lösemittelfreies oder lösemittelarmes Verfahren zum Einsatz kommt, wobei lösemittelarmes Verfahren heisst, das weniger als 35 Gew.-% Lösungsmittel bei der Herstellung der porösen PU-Schicht verwendet werden, wobei sich die Gew.-% Angabe auf gesamte Reaktionsmischung bezieht.

5. Verwendung nach einem der Ansprüche 1 bis 4, **dadurch gekennzeichnet, dass** zur Herstellung der porösen Polyurethanschicht chemisch blockierte, vorzugsweise Oxim-blockierte, NCO-Prepolymere und Vernetzer, vorzugsweise umfassend aliphatische und/oder cycloaliphatische und/oder aromatische Amine mit mindestens 2 primären und/oder sekundären Aminogruppen, eingesetzt werden.

6. Verwendung nach einem der Ansprüche 1 bis 4, **dadurch gekennzeichnet, dass** zur Herstellung der porösen Polyurethanschicht eine Polyol-Komponente, ein Katalysator sowie ein Polyisocyanat und/oder ein Polyisocyanat-Prepolymer eingesetzt werden.

7. Poröse Polyurethanschicht, erhältlich nach einem der Ansprüche 1 bis 6, wobei die Dicke der Polyurethanschicht im Bereich von 0,05 bis 3 mm liegt.

8. Verfahren zur Herstellung eines Verbundgebildes, umfassend mindestens eine poröse Polyurethanschicht sowie eine Trägerschicht,
wobei die mindestens eine poröse Polyurethanschicht unmittelbar oder mittelbar auf eine Trägerschicht aufgebracht wird, wobei die mindestens eine Polyurethanschicht dadurch ausgebildet wird, das eine zur Bildung eines Polyurethans fähige reaktive Masse auf die Trägerschicht aufgebracht und ausgehärtet wird,
**dadurch gekennzeichnet, dass** die Bildung der porösen Polyurethanschicht in Gegenwart einer siliziumhaltigen Verbindung der Formel (1) erfolgt,
wobei die Dicke der Polyurethanschicht im Bereich von 0,05 bis 3 mm liegt.

9. Verfahren zur Herstellung eines Verbundgebildes nach Anspruch 8, wobei die zur Bildung eines Polyurethans fähige reaktive Masse chemisch blockierte, vorzugsweise Oxim-blockierte, NCO-Prepolymere und Vernetzer, vorzugsweise umfassend aliphatische und/oder cycloaliphatische und/oder aromatische Aminen mit mindestens 2 primären und/oder sekundären Aminogruppen, umfasst.

10. Verfahren zur Herstellung eines Verbundgebildes nach Anspruch 8, wobei die zur Bildung eines Polyurethans fähige reaktive Masse

    i) ein Polyol mit primären und/oder sekundären endständigen Hydroxyfunktionalitäten,
    ii) ein Polyisocyanat und/oder einen Polyisocyanat-Prepolymer, und
    iii) einen Katalysator

    umfasst.

11. Verbundgebilde, umfassend mindestens eine poröse Polyurethanschicht nach Anspruch 7 sowie eine Trägerschicht, wobei beide Schichten mittelbar oder unmittelbar miteinander verbunden sind.

12. Verbundgebilde, erhältlich gemäß dem Verfahren nach einem der Anspruch 8 bis 10.

13. Verwendung des Verbundgebildes nach einem der Ansprüche 11 oder 12 als Kunstleder oder als Schaumfolie.

14. Verwendung von siliziumhaltigen Verbindungen der Formel (1) bei der Herstellung von porösen Polyurethanschichten zur Verbesserung der Verlaufseigenschaften der zur Polyurethanschicht reagierenden Reaktionsmasse und/oder zur Zelloptimierung des resultierenden Polyurethanschicht, vorzugsweise zur Homogenisierung der Zellstruktur über die gesamte resultierende Polyurethanschicht, insbesondere im Rahmen der Kunstleder- oder Schaumfolienherstellung, wobei die Dicke der Polyurethanschicht im Bereich von 0,05 bis 3 mm liegt.

## Claims

1. Use of at least one silicon-containing compound in the production of porous polyurethane layers, wherein the silicon-containing compound has the formula (1)

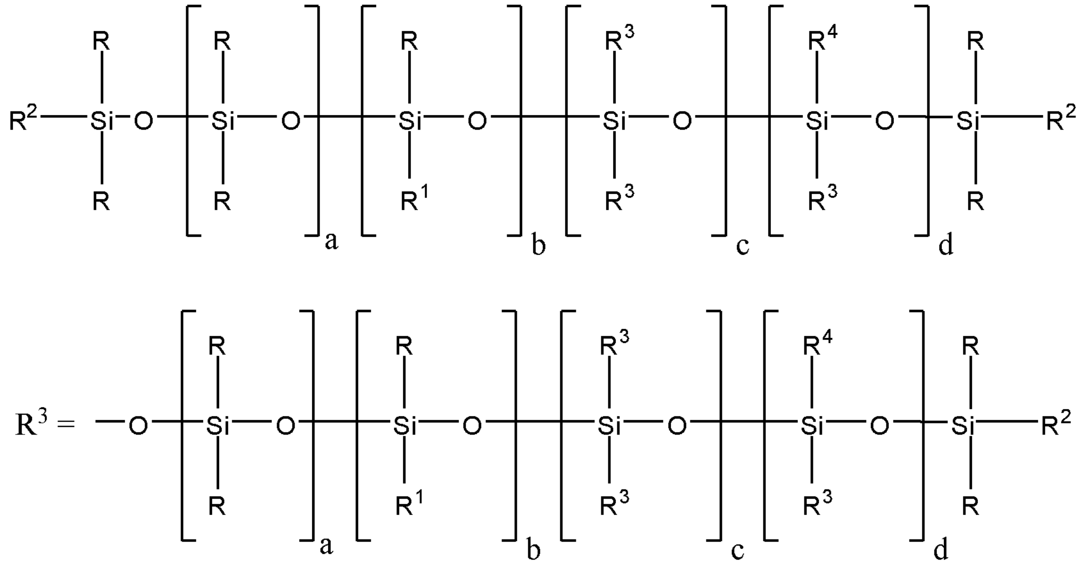

(1)

where

a is independently from 0 to 500, preferably from 1 to 300 and especially from 2 to 150,
b is independently from 0 to 60, preferably from 1 to 50 and especially from 1 to 30,
c is independently from 0 to 10, preferably from 0 or > 0 to 5,
d is independently from 0 to 10, preferably from 0 or > 0 to 5,

with the proviso that, for each molecule of the formula (1), the average number $\sum d$ of T units and the average number $\sum c$ of Q units per molecule is not greater than 50 in either case, the average number $\sum a$ of D units per molecule is not greater than 2000 and the average number $\sum b$ of the siloxy units bearing $R^1$ per molecule is not greater than 100,

R is independently at least one radical from the group of linear, cyclic or branched, aliphatic or aromatic, saturated or unsaturated hydrocarbon radicals having from 1 up to 20 carbon atoms, but is preferably a methyl radical,
$R^2$ is independently $R^1$ or R,
$R^1$ is different from R and $R^1$ is independently a radical selected from the group consisting of

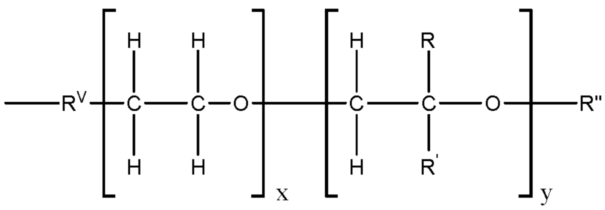

$-CH_2-CH_2-CH_2-O-(CH_2-CH_2O-)_x-(CH_2-CH(R')O-)_y-R''$

$-CH_2-CH_2-O-(CH_2-CH_2O-)_x-(CH_2-CH(R')O-)_y-R''$

$-O-(C_2H_4O-)_x-(C_3H_5O-)_y-R'$

$-CH_2-R^{IV}$

$-CH_2-CH_2-(O)_{x'}-R^{IV}$

$-CH_2-CH_2-CH_2-O-CH_2-CH(OH)-CH_2OH$

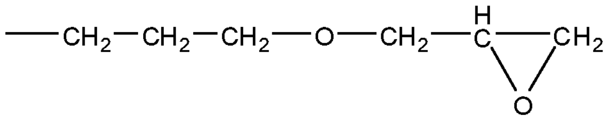

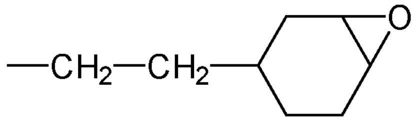

or

$$-CH_2-CH_2-CH_2-O-CH_2-C(CH_2OH)_2-CH_2-CH_3,$$

where

x is from 0 to 100, preferably > 0, especially from 1 to 50,
x' is 0 or 1,
y is from 0 to 100, preferably > 0, especially from 1 to 50,
R' is independently an optionally substituted alkyl or aryl group having from 1 to 12 carbon atoms, substituted, for example, by alkyl radicals, aryl radicals or haloalkyl or haloaryl radicals, where different R' substituents may be present within any $R^1$ radical and/or any molecule of the formula (1), and
R" is independently a hydrogen radical or an alkyl group having from 1 to 4 carbon atoms, a C(O)-R'" group with R'" = alkyl radical, a $-CH_2-O-R'$ group, an alkylaryl group, for example a benzyl group, or a -C(O)NH-R' group,
$R^{IV}$ is a linear, cyclic or branched, optionally substituted, e.g. substituted by halogens, hydrocarbon radical having from 1 to 50, preferably from 9 to 45, more preferably from 13 to 37, carbon atoms,
$R^V$ $-D-G_z-$
where D is a linear, cyclic or branched, optionally substituted, e.g. substituted by heteroatoms such as O, N or halogens, saturated or unsaturated hydrocarbon radical having from 2 to 50, preferably from 3 to 45, more preferably from 4 to 37, carbon atoms,
G corresponds to one of the following formulae

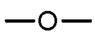 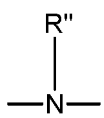 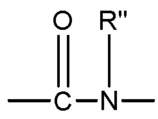 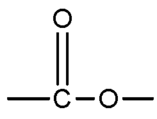

z can be 0 or 1,
$R^4$ may independently be R, $R^1$ and/or a functionalized, organic, saturated or unsaturated radical having substitution by heteroatoms, selected from the group of the alkyl, aryl, chloroalkyl, chloroaryl, fluoroalkyl, cyanoalkyl, acryloyloxyaryl, acryloyloxyalkyl, methacryloyloxyalkyl, methacryloyloxypropyl and vinyl radical,

with the proviso that at least one substituent from $R^1$, $R^2$ and $R^4$ is not R,
wherein the thickness of the polyurethane layer is in the range from 0.05 to 3 mm.

2. Use according to Claim 1, wherein the thickness of the polyurethane layer is in the range from 0.1 to 3 mm and in particular from 0.15 to 1 mm.

3. Use according to Claim 1 or 2, **characterized in that** the total amount of the silicon-containing compound(s) of the formula (1) used is, based on the finished polyurethane, from 0.01 to 10% by weight, preferably from 0.1 to 3% by weight.

4. Use according to any of Claims 1 to 3, **characterized in that** a solvent-free or low-solvent process is used for producing the porous polyurethane layer, wherein low-solvent process means that less than 35% by weight of solvent are used in the production of the porous PU layer, where the % by weight is based on the total reaction mixture.

5. Use according to any of Claims 1 to 4, **characterized in that** chemically blocked, preferably oxime-blocked, NCO

prepolymers and crosslinkers, preferably comprising aliphatic and/or cycloaliphatic and/or aromatic amines having at least two primary and/or secondary amino groups are used for producing the porous polyurethane layer.

**6.** Use according to any of Claims 1 to 4, **characterized in that** a polyol component, a catalyst and a polyisocyanate and/or a polyisocyanate prepolymer are used for producing the porous polyurethane layer.

**7.** Porous polyurethane layer obtainable according to any of Claims 1 to 6, wherein the thickness of the polyurethane layer is in the range from 0.05 to 3 mm.

**8.** Process for producing a composite structure comprising at least one porous polyurethane layer and a support layer, where the at least one porous polyurethane layer is applied directly or indirectly to a support layer and the at least one polyurethane layer is formed by applying a reactive composition capable of forming a polyurethane to the support layer and curing the reactive composition, **characterized in that** the formation of the porous polyurethane layer is carried out in the presence of a silicon-containing compound of the formula (1),
wherein the thickness of the polyurethane layer is in the range from 0.05 to 3 mm.

**9.** Process for producing a composite structure according to Claim 8, wherein the reactive composition capable of forming a polyurethane comprises chemically blocked, preferably oxime-blocked, NCO prepolymers and crosslinkers, preferably comprising aliphatic and/or cycloaliphatic and/or aromatic amines having at least two primary and/or secondary amino groups.

**10.** Process for producing a composite structure according to Claim 8, wherein the reactive composition capable of forming a polyurethane comprises

i) a polyol having primary and/or secondary terminal hydroxy functions,
ii) a polyisocyanate and/or a polyisocyanate prepolymer, and
iii) a catalyst.

**11.** Composite structure comprising at least one porous polyurethane layer according to Claim 7 and a support layer, wherein the two layers are joined indirectly or directly to one another.

**12.** Composite structure obtainable by the process according to any of Claims 8 to 10.

**13.** Use of the composite structure according to either Claim 11 or 12 as artificial leather or as foam film.

**14.** Use of silicon-containing compounds of the formula (1) in the production of porous polyurethane layers for improving the flow properties of the reaction composition which is reacting to form the polyurethane layer and/or for optimizing the cells of the resulting polyurethane layer, preferably for homogenizing the cell structure over the entire resulting polyurethane layer, especially in the context of artificial leather or foam film production, wherein the thickness of the polyurethane layer is in the range from 0.05 to 3 mm.

## Revendications

**1.** Utilisation d'au moins un composé contenant du silicium lors de la fabrication de couches de polyuréthane poreuses, le composé contenant du silicium satisfaisant la formule (1) :

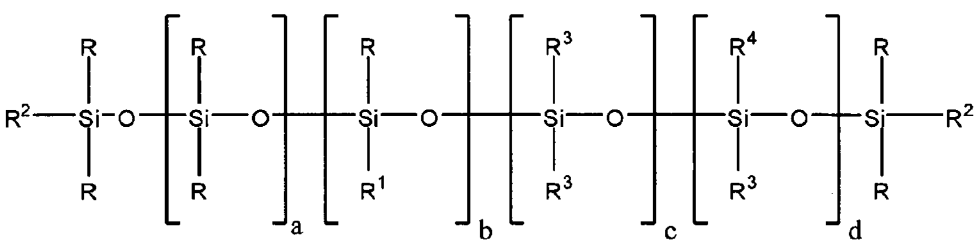

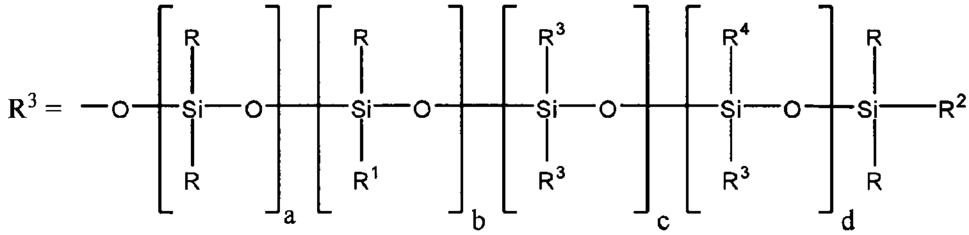

(1)

avec

les a valant indépendamment l'un de l'autre 0 à 500, de préférence 1 à 300 et notamment 2 à 150,
les b valant indépendamment l'un de l'autre 0 à 60, de préférence 1 à 50 et notamment 1 à 30,
les c valant indépendamment l'un de l'autre 0 à 10, de préférence 0 ou > 0 à 5,
les d valant indépendamment l'un de l'autre 0 à 10, de préférence 0 ou > 0 à 5,
à condition que, par molécule de la formule (1), le nombre moyen $\sum d$ des unités T et le nombre moyen $\sum c$ des unités Q par molécule ne soient chacun pas supérieurs à 50, que le nombre moyen $\sum a$ des unités D par molécule ne soit pas supérieur à 2 000 et que le nombre moyen $\sum b$ des unités siloxy portant $R^1$ par molécule ne soit pas supérieur à 100,
les R étant indépendamment les uns des autres au moins un radical du groupe des radicaux hydrocarbonés linéaires, cycliques ou ramifiés, aliphatiques ou aromatiques, saturés ou insaturés, de 1 à 20 atomes C, de préférence toutefois un radical méthyle,
les $R^2$ étant indépendamment les uns des autres $R^1$ ou R, les $R^1$ étant différents de R et les $R^1$ étant indépendamment les uns des autres un radical choisi dans le groupe constitué par :

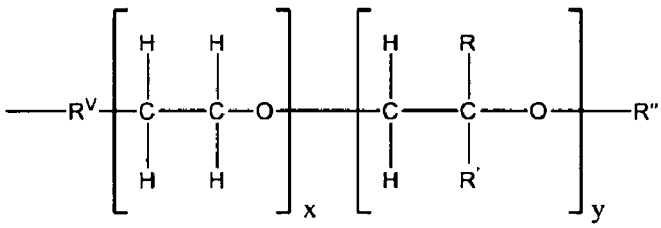

$-CH_2-CH_2-CH_2-O-(CH_2-CH_2O-)_x-(CH_2-CH(R')O-)_y-R''$

$-CH_2-CH_2-O-(CH_2-CH_2O-)_x-(CH_2-CH(R')O-)_y-R''$

$-O-(C_2H_4O-)_x-(C_3H_5O-)_y-R'$

$-CH_2-R^{IV}$

$-CH_2-CH_2-(O)_{x'}-R^{IV}$

$-CH_2-CH_2-CH_2-O-CH_2-CH(OH)-CH_2OH$

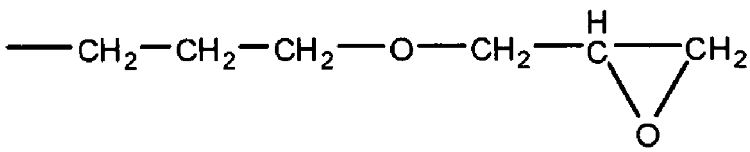

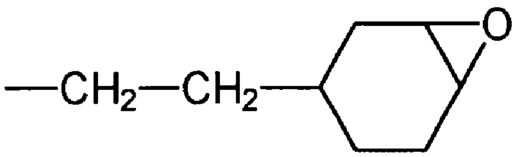

ou

$$-CH_2-CH_2-CH_2-O-CH_2-C(CH_2OH)_2-CH_2-CH_3,$$

où
x vaut 0 à 100, de préférence > 0, notamment 1 à 50,
x' vaut 0 ou 1,
y vaut 0 à 100, de préférence > 0, notamment 1 à 50, les R' sont indépendamment les uns des autres, un groupe alkyle ou aryle éventuellement substitué, par exemple avec des radicaux alkyle, des radicaux aryle ou des radicaux halogénoalkyle ou halogénoaryle, de 1 à 12 atomes C, des substituants R' différents les uns des autres pouvant être présents à l'intérieur d'un radical $R^1$ et/ou d'une molécule de la formule (1), et
les R" sont indépendamment les uns des autres un radical hydrogène ou un groupe alkyle de 1 à 4 atomes C, un groupe -C(O)-R"', avec R'" = un radical alkyle, un groupe $-CH_2-O-R'$, un groupe alkylaryle, tel que p. ex. un groupe benzyle, ou un groupe -C(O)NH-R',
$R^{IV}$ est un radical hydrocarboné linéaire, cyclique ou ramifié, éventuellement substitué, p. ex. substitué avec des halogènes, de 1 à 50, de préférence 9 à 45, de préférentiellement 13 à 37 atomes C, $-D-G_z-$
$R^V$ est
D étant un radical hydrocarboné linéaire, cyclique ou ramifié, éventuellement substitué, p. ex. substitué avec des hétéroatomes tels qu'O, N ou des halogènes, saturé ou insaturé, de 2 à 50, de préférence 3 à 45, de préférentiellement 4 à 37 atomes C,
G correspondant à une des formules suivantes :

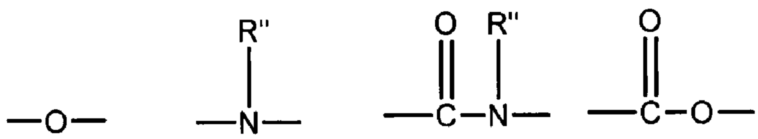

z pouvant valoir 0 ou 1,
les $R^4$ étant indépendamment les uns des autres R, $R^1$ et/ou un radical substitué avec des hétéroatomes, fonctionnalisé, organique, saturé ou insaturé, choisi dans le groupe des radicaux alkyle, aryle, chloroalkyle, chloroaryle, fluoroalkyle, cyanoalkyle, acryloxyaryle, acryloxyalkyle, méthacryloxyalkyle, méthacryloxypropyle ou vinyle,
à condition qu'au moins un substituant parmi $R^1$, $R^2$ et $R^4$ ne représente pas R,
l'épaisseur de la couche de polyuréthane se situant dans la plage allant de 0,05 à 3 mm.

**2.** Utilisation selon la revendication 1, dans laquelle l'épaisseur de la couche de polyuréthane se situe dans la plage allant de 0,1 à 3 mm et notamment de 0,15 à 1 mm.

**3.** Utilisation selon la revendication 1 ou 2, **caractérisée en ce que** la quantité totale du ou des composés contenant du silicium de la formule (1) utilisés, par rapport au polyuréthane fini, est de 0,01 à 10 % en poids, de préférence de 0,1 à 3 % en poids.

**4.** Utilisation selon l'une quelconque des revendications 1 à 3, **caractérisée en ce que**, pour la fabrication de la couche de polyuréthane poreuse, un procédé sans solvant ou pauvre en solvant est utilisé, un procédé pauvre en solvant signifiant que moins 35 % en poids de solvant est utilisé lors de la fabrication de la couche de PU poreuse, les données % en poids se rapportant au mélange réactionnel total.

**5.** Utilisation selon l'une quelconque des revendications 1 à 4, **caractérisée en ce que**, pour la fabrication de la couche de polyuréthane poreuse, des prépolymères de NCO bloqués chimiquement, de préférence bloqués par de l'oxime, et des agents de réticulation, de préférence comprenant des amines aliphatiques et/ou cycloaliphatiques et/ou aromatiques, contenant au moins 2 groupes amino primaires et/ou secondaires, sont utilisés.

**6.** Utilisation selon l'une quelconque des revendications 1 à 4, **caractérisée en ce que**, pour la fabrication de la couche de polyuréthane poreuse, un composant polyol, un catalyseur, ainsi qu'un polyisocyanate et/ou un prépolymère de polyisocyanate sont utilisés.

**7.** Couche de polyuréthane poreuse, pouvant être obtenue selon l'une quelconque des revendications 1 à 6, l'épaisseur

de la couche de polyuréthane se situant dans la plage allant de 0,05 à 3 mm.

**8.** Procédé de fabrication d'une structure composite, comprenant au moins une couche de polyuréthane poreuse, ainsi qu'une couche support,
ladite au moins une couche de polyuréthane poreuse étant appliquée directement ou indirectement sur une couche support, ladite au moins une couche de polyuréthane étant formée par application d'une masse réactive apte à la formation d'un polyuréthane sur la couche support et durcissement,
**caractérisé en ce que** la formation de la couche de polyuréthane poreuse a lieu en présence d'un composé contenant du silicium de la formule (1),
l'épaisseur de la couche de polyuréthane se situant dans la plage allant de 0,05 à 3 mm.

**9.** Procédé pour la fabrication d'une structure composite selon la revendication 8, dans lequel la masse réactive apte à la formation d'un polyuréthane comprend des prépolymères de NCO bloqués chimiquement, de préférence bloqués par de l'oxime, et des agents de réticulation, de préférence comprenant des amines aliphatiques et/ou cycloaliphatiques et/ou aromatiques, contenant au moins 2 groupes amino primaires et/ou secondaires.

**10.** Procédé pour la fabrication d'une structure composite selon la revendication 8, dans lequel la masse réactive apte à la formation d'un polyuréthane comprend :

i) un polyol contenant des fonctionnalités hydroxy terminales primaires et/ou secondaires,
ii) un polyisocyanate et/ou un prépolymère de polyisocyanate, et
iii) un catalyseur.

**11.** Structure composite, comprenant au moins une couche de polyuréthane poreuse selon la revendication 7, ainsi qu'une couche support, les deux couches étant reliées directement ou indirectement l'une avec l'autre.

**12.** Structure composite, pouvant être obtenue par le procédé selon l'une quelconque des revendications 8 à 10.

**13.** Utilisation de la structure composite selon l'une quelconque des revendications 11 ou 12 en tant que cuir artificiel ou en tant que film moussé.

**14.** Utilisation de composés contenant du silicium de la formule (1) lors de la fabrication de couches de polyuréthane poreuses pour améliorer les propriétés de nivellement de la masse réactionnelle réagissant en la couche de polyuréthane et/ou pour l'optimisation cellulaire de la couche de polyuréthane résultante, de préférence pour l'homogénéisation de la structure cellulaire sur l'ensemble de la couche de polyuréthane résultante, notamment dans le cadre de la fabrication de cuir artificiel ou de films moussés, l'épaisseur de la couche de polyuréthane se situant dans la plage allant de 0,05 à 3 mm.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2476800 A1
- WO 2014012710 A1
- EP 1059379 A2
- WO 2009011776 A1
- US 4483894 A
- WO 2008012908 A1
- EP 1520870 A1
- CN 103665385
- CN 103657518
- CN 103055759
- CN 103044687
- US 20080125503 A
- EP 1211279 A
- EP 0867464 A
- EP 0867465 A
- EP 0275563 A
- EP 0431386 A2
- EP 1712578 A
- EP 1161474 A
- WO 0058383 A
- US 20070072951 A
- EP 1678232 A
- WO 2005085310 A
- US 3900424 A
- US 3953383 A
- WO 2010028362 A
- WO 2009130470 A
- WO 2013022932 A
- WO 2011163133 A
- US 4500704 A
- WO 2008058913 A
- WO 2005033167 A
- US 20060293400 A
- WO 2006094227 A
- WO 2004096882 A
- US 20020103091 A
- WO 2006116456 A
- WO 2004020497 A
- US 20060229375 A
- WO 2009058367 A
- DE 1020070554852
- EP 1520870 A